# EUROPEAN PATENT APPLICATION

(11) **EP 4 654 048 A1**
(43) Date of publication of application: **26.11.2025**
(21) Application number: 24177380.3
(22) Date of filing: 22.05.2024
(51) Int. Cl.: G06F 18/2413, G06V 10/82, G06F 18/2113, G06F 18/2115, G06F 18/25, G06F 18/20, G06V 10/771, G06V 10/80

(54) **IMPROVED METHOD FOR CLASSIFICATION OF DATA USING DYNAMIC VECTOR PARTITIONING AND VOTING**

(71) Applicant: eSmart Systems AS, 1783 Halden (NO)
(72) Inventor: Van Nguyen, Nhan, 1782 HALDEN (NO)
(74) Representative: AWA Norway AS

(57) **Abstract**

The invention concerns a computer-implemented method for classifying test dataset *xₜₑₛₜ* such as at least one of images, videos, audio and text. The method further comprises the steps of performing feature extraction, dividing the feature vector into a plurality of subfeature vectors, classifying each subfeature vector specific classes and performing voting to determine an optimized class of the test dataset *xₜₑₛₜ*.

## Description

### Technical Field

The invention concerns an improved methodology for handling challenges involving i.a. curse of dimensionality and feature redundancy in classification of datasets such as images, audios or text. The improved methodology involves classification using dynamic vector partitioning and subsequent voting.

### Background

### AI Model Development for Power Line Inspection: A Data Challenge

Developing AI models for classifying power line components and detecting defects presents significant challenges, predominantly due to the limited availability of training data. This problem is especially pronounced in defect classification due to the scarcity of image examples.

Traditional machine learning models, reliant on extensive datasets, falter in this environment, necessitating the exploration of alternative methodologies.

### Emergence of Few-Shot Learning as a Solution to Data Scarcity

In response to the shortage of data, few-shot learning has emerged as a pivotal strategy.

This approach empowers models to effectively learn from a minimal number of labeled examples per class, adapting to new categories with scarce data.

Within the context of power line inspection, where encountering various defect types is infrequent, few-shot learning may be indispensable for developing classifiers capable of recognizing and categorizing these rare defects.

### Evolution of Few-Shot Learning: Embracing Foundation Models

The integration of foundation models has significantly advanced the domain of few-shot learning, particularly in distance metrics-based methods such as
- prototypical networks (*PN*),
- nearest neighbours (*NN*), and
- nearest centroids (*NC*) (including nearest sub-centroids (*NSC*)).

Foundation models have unlocked new prospects by offering advanced feature extraction, i.e. transforming raw input values such as pixel values to feature vectors, thereby enriching the representation of input data. This advancement not only aligns with the inherent strengths of the distance metrics based methods such as *PNs* but also amplifies their functionality, marking a substantial evolution in the field of few-shot learning.

*PNs*, exemplary in this context, function by transforming support examples into feature vectors and generating class prototypes through averaging these vectors.

Support examples may be images used for creating class prototypes while test examples may be images used for testing/classification. Support examples and test examples are converted to their respective feature vectors through the above mentioned feature extractions.

A test example / test image *xₜₑₛₜ* is classified by locating the nearest class prototype, demonstrating the efficacy of *PNs* used in few-shot learning scenarios.

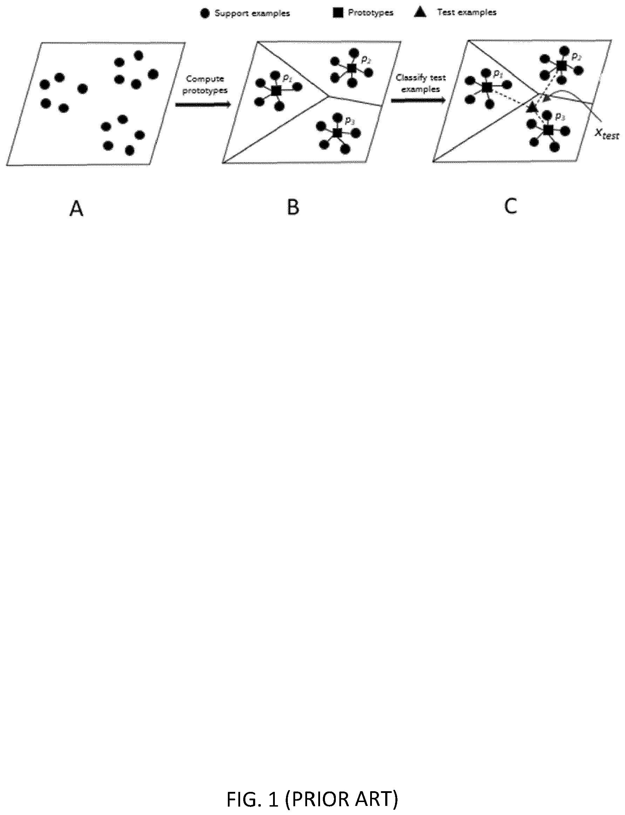

The classification procedure is schematically illustrated in Figure 1 A-C, where fig. 1 A shows the single support feature vectors (circles) created by feature extraction methods and plotted in the feature space, fig. 1 B shows the computation of class prototypes *p₁, p₂* and *p₃* (squares) and the categorization into three classes c (areas encompassing the single feature vectors and the class prototypes) and fig. 1C shows the calculation of Euclidean distances *d* from the test image *xₜₑₛₜ* (triangle) to the prototypes *p_{c}* of each class *c*.

Algorithm 1 shows an example of a prior art method for computing prototypes *p_{c}* of input raw data *X* based on a pretrained model F. The input raw data *X* comprises support dataset *xᵢ*, test dataset xₜₑₛₜ, labels/classes *yᵢ* of support dataset *xᵢ* and available individual classes c for classifications. The output is a classification *yₜₑₛₜ* of a test example *fₜₑₛₜ* and confidence score Confidence(*c*). Note that *fₜₑₛₜ* corresponds to the feature vector of *xₜₑₛₜ.* These numerals will be used hereinafter.

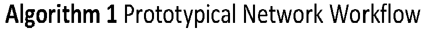

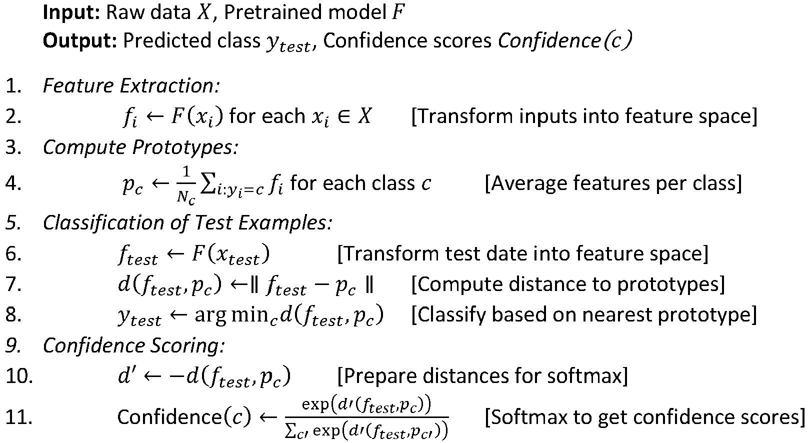

The main objective of the above algorithm is to use input raw data (including both support examples and test examples) in a few-shot learning scenario using a pretrained foundation model *F* as the feature extractor and *PN* model to perform classification. Relevant examples of pretrained foundation models *F* are OpenAI's CLIP and Meta's Dinov2.

### Significance of Euclidean Distance in High-Dimensional Spaces

Euclidean distance in distance metrics based methods such as *PNs* forms the basis for clustering and differentiating classes in few-shot learning scenarios.

Its effectiveness, however, diminishes in high-dimensional spaces produced by foundation models, leading to issues like the curse of dimensionality.

For a detailed explanation of the curse(s) of dimensionality, see the article N. Altman et al., Nature Methods 15, 399-400 (2018), hereby incorporated by reference.

### Foundation Models: Opportunities and Challenges in High-Dimensional Spaces

Foundation models have significantly advanced the field of few-shot classification by enhancing feature extraction capabilities. Despite their advantages, these models also present notable challenges which are primarily linked to the high-dimensional feature vectors they produce.

These high-dimensional spaces not only complicate traditional distance metric applications such as *PNs*, and thereby invoking said curse of dimensionality, but also introduce the substantial issue of feature redundancy. In these high-dimensional spaces the richness of extracted features can be a double-edged sword. While providing detailed and comprehensive data representations, the models often generate feature vectors filled with redundant or irrelevant information.

Such redundancy or irrelevancy is particularly problematic in few-shot learning scenarios, where the model needs to learn and make accurate predictions from a limited set of examples.

In addition, it typically also obscures significant features among less informative ones, hindering the model's ability to learn efficiently and adapt rapidly to new tasks.

Challenges related to feature redundancy in high-dimensional spaces for few-shot tasks are known in the field, see e.g. X. Luo et al., Computer Vision and Pattern Recognition, submitted 5 Oct, 2023, arXiv 2310.03843 (Cornell University).

Another solution addressing the challenge of feature redundancy is disclosed in the article X. Zhu et al., Proc. Of the IEEE/CVF International Conference on Computer Vision (ICCV), 2023, pp. 2605-2615.

However, these prior art methods do not provide a solution addressing both the curse of dimensionality and the feature redundancy. Moreover, their attempt to address feature redundancy represents an alternative approach compared to the method according to the invention.

### The need for improved methodologies

Hence, confronting the complexities of high-dimensional spaces from foundation models demands refined methodological approaches, especially for distance metric learning methods, which are able to efficiently address the above mentioned challenges, i.e. the curse of dimensionality and the feature redundancy.

Such a methodological approach would ensure that only the most relevant features are emphasized for classification in an accurate and consistent way.

This demand is particularly useful in few-shot learnings scenarios where the input data is scarce.

One important example is availability of images showing faults in power lines, where efficient and reliable detection, recognition and analyses may have huge impact on power supply stability and safety.

Hence, in particular for few-shot learning scenarios, these methodologies are crucial for achieving precise classification and robust model adaptability.

It is thus an object of the present invention is to present a method that improves the handling of high-dimensional data compared to prior art method, and in particular classification of dataset suffering from data scarcity.

Another object of the present invention is to present a method that addresses the challenges posed by both the curse of dimensionality and the feature redundancy.

A further objective of the invention is to facilitate the use of features extracted by foundation models for few-shot learning without need of fine-tuning.

A further objective of the invention is to facilitate use of large feature vectors for allowing combination of features from multiple foundation models.

Other objectives will be apparent from the discussions of advantages / effects of the various methods presented hereinafter.

### Summary of the Invention

The present invention is set forth and characterized in the main claims, while the dependent claims describe other characteristics of the invention.

In a first aspect, the invention concerns a computer-implemented method for classifying test dataset *xₜₑₛₜ* such as at least one of images, videos, audio and text. The images may for example be images with and without particular anomalies such as defects in components. The text may for example be e-mail classifications.

The initial step of the method is *A*: receiving input data comprising classification dataset *X*, a subfeature size set *S* comprising a number of subvector segments *j* and a pretrained model set *Fₛₑₜ* comprising at least one pretrained model *F*. The classification dataset *X* comprises a support dataset including input classes of the support dataset, a number of individual classes *c* for classification and the test dataset *xₜₑₛₜ.* The subfeature size set *S* comprises a number of subvector segments *j* for each feature vector *SFV_{i,j},SFV_{test,j}* The pretrained model set *Fₛₑₜ* comprises one or more pretrained models *F* such as the commercially available foundation models Meta's Dinov2 or OpenAI's CLIP. The number of individual classes c may be any positive integer such as 2, 3, 4, 5 or 6. For example 2 individual classes, class 1 and class 2, may represent defect and non-defect in a component of a power line system.

Note that the number of subvector segments *j* in the subfeature size set S covers the case where there is only one subfeature size (*S*= {*s*₁}) (i.e. all subfeature segments *j* have the same size) or the case where there is a plurality of subfeature sizes (*S* = {*s₁*, *s₂*,...,*sₙ*}) (i.e. some or all of the subfeature segments *j* have different sizes, *s₁, s₂,...,sₙ*). Furthermore, the input data in step *A* may contain alternative data from which the number of subfeature segments *j* may be calculated, for example by dividing the total number of features with the size of the subfeature vector.

The method further comprises the steps of
- *B*: performing feature extraction of the support dataset *xᵢ* and the test dataset *xₜₑₛₜ* of the classification dataset *X* using the pretrained model set *Fₛₑₜ* to generate support feature vectors *fᵢ* and test feature vectors *fₜₑₛₜ,* respectively;
- *C*: in accordance with the number of subvector segments (*j*) within the subfeature size set (*S*), dividing each support feature vector *fᵢ* into a plurality of support subfeature vectors *SFV_{i,j}* and each test feature vector *fₜₑₛₜ* into a plurality of test subfeature vectors *SFVtest,j,* respectively, wherein each of the subfeature vectors *SFV_{i,j},SFV_{test,j}* contain at least one, preferably at least two, subvector feature(s) / sub-dimension(s) *sⱼ*;
- *D*: for each test subfeature vector *SFV_{test,j},* implementing at least one distance metrics-based method to assign the subfeature vector *SFV_{test,j}* to a specific individual class *c*, and
- *E:* performing voting of the test subfeature vectors *SFV_{test,j}* based on the assigned individual classes *c* to determine a predicted / optimized class *yₜₑₛₜ* for the test dataset *xₜₑₛₜ* and thus enhancing the production accuracy of the classification.

This method introduces a robust process for classifying test datasets by using one or more pretrained foundation models for feature extraction and subsequent vector partitioning. The division of vectors into subfeature vectors reduces feature redundancy and the curse of dimensionality.

For the challenge with feature redundancy particular reference is made to step C. By dividing the feature vectors into smaller subfeature vectors, each subfeature vector focuses on a distinct subset of features. This helps in identifying and isolating redundant features that do not contribute to classification accuracy. Also, redundant features within each subfeature vector have less influence on the overall classification, as their impact is limited to specific subsets rather than the entire feature set.

The curse of dimensionality is particularly addressed in step D as further described above.

At least one of the distances used in the distance metrics-based method(s) may be an Euclidian distance.

The step(s) of the method(s) mentioned in step D may involve the test subfeature vector *SFV_{test,j}* and at least one of the support subfeature vectors *SFV_{i,j}.*

The voting in step E may be based on majority voting, i.e. the individual class *c* having the highest number of assigned test subfeature vectors *SFV_{test,j}* becomes the predicted class *yₜₑₛₜ.* Alternatively the voting may be a weighted voting taking into account one or more weight factors *w* (see below).

Such majority voting may be performed as follows: Each sub-classifier is classified separately. Each time a sub-classifier classifies a subfeature vector as class *A*, class *A* will get one vote. The same is performed for the remaining classes *B, C*, etc. The total number of votes for each class is then counted (*A*, *B, C,* etc) and the class that has the majority of the vote becomes the selected output of the model (predicted class).

Steps D and E ensure that the test image *xₜₑₛₜ* is classified based on the most similar feature patterns observed during training, thereby leveraging the rich information encoded in the feature space.

In an exemplary process, the at least one distance metrics-based method in step *D* determining / allocating the individual class c for the test subfeature vectors *SFV_{test,j}* comprises at least one of prototypical networks *PN,* nearest neighbors *NN,* nearest centroids *NC* and nearest sub-centroids *NSC*.

The prototypical networks *PN* method involves calculating sub-prototypes *p*_{*c*_*j*} of the support subfeature vectors *SFV_{i,j}* and finding minimum distance *d^{min}ⱼ* between the support subfeature vectors *SFV_{i,j}* and the sub-prototypes *p_{c_j}*. The nearest neighbors NN method involves calculating *k* nearest neighbors and/or all neighbors within a radius *r* from each test subfeature vector *SFV_{test,j}.* The nearest centroids *NC* method involves calculating centroids *C_{c_j}* for the support subfeature vectors *SFV_{i,j}* and finding the centroid *C*_{*c*_*j*} nearest to the test subfeature vector *SFV_{test,j}.* And the nearest sub-centroids *NSC* method a plurality of determined sub-centroids *SC*_{*c*_*j*} of each individual class *c* (for example determined by clustering) are applied to find the nearest sub-centroid *NSC_{c_j}* to the test subfeature vector *SFV_{test,j}.*

Each of these metrics-based method has characteristics that may be beneficial for the classification and should be determined on a case by case basis. For example, in nearest sub-centroids (*NSC*) in few-shot learning each class is represented by multiple sub-centroids (instead of a single one as in nearest centroids (*NC*)). This approach could assist in capturing the internal variance within classes more effectively by acknowledging different sub-groups or patterns within a class with the aim of refining class representations for improved classification accuracy in scenarios with significant intra-class variation.

The use of various distance metrics-based methods like prototypical networks, nearest neighbours, and centroids allows for flexibility and precision, particularly in scenarios with scarce data.

In another exemplary process, step *D* may further comprise calculating confidence values/scores *Confidenceⱼ(c)* of each test subfeature vector *SFV_{test,j}* and each individual class *c* and step *F* may further comprise collecting and averaging the confidence scores *Confidenceⱼ(c)* for the respective test subfeature vectors *SFV_{test,j}* to determine a predicted confidence value *Confidence(c)* for the predicted class *yₜₑₛₜ* of the test dataset *xₜₑₛₜ.*

Integrating confidence value calculations in class assignments and averaging these for final predictions enhances the trustworthiness of the confidence scores, thereby increasing The model's reliability.

In another exemplary process, the subfeature vectors (*SFV_{i,j},SFV_{test,j}*) corresponding to two or more of the subvector segments (*j*) have dissimilar number of subvector features (s*_{SF,j}*).

Using multiple subsector sizes address the loss of global relationships and enable modelling feature relationships at different levels. A small size will capture local relationships in small groups of features, while a large size will capture global relationship in large groups of features.

In another exemplary process, the input data in step A may further comprise a sorting technique set *T* comprising one or more sorting techniques *t.* Furthermore, the step *B* may further comprise choosing a sorting technique *t* from the sorting technique set *T,* generating a number of sorting indices equaling the number of features in the support feature vectors *fᵢ* and sorting the support feature vectors *fᵢ* and the test feature vectors *fₜₑₛₜ* according to the chosen sorting technique *t* and the generated sorting indices.

Said sorting technique set *T* may comprise a sorting technique based on computing standard deviation *σ^{sort}* for each feature of the support feature vectors *fᵢ* or a function of the support feature vector *fᵢ* and/or each feature of the test feature vector *fₜₑₛₜ.* Said sorting may thus be based on such standard deviation *σ^{sort}* for generating the sorted support feature vector(s) *fᵢ* and the sorted test feature vector(s)*fₜₑₛₜ*.

In addition, or alternatively, said sorting technique set *T* may comprise a sorting technique based on computing distance *d^{sort}*) between each feature of the support feature vectors *fᵢ* or each feature of a function of the support feature vector *fᵢ* and/or each feature of the test feature vector *fₜₑₛₜ*. Said sorting may thus be based on such distance *d^{sort}* or a function of the distance *d^{sort}* for generating the sorted support feature vector(s) *fᵢ* and the sorted test feature vector(s) *fₜₑₛₜ*. The distance may be at least one of average distance, maximum distance, minimum distance, standard deviations of the distances.

Implementing sorting techniques prior to classification organizes the data more effectively, reducing the influence of outliers and aligning features optimally for subsequent analysis steps. This strategic sorting process serves the purpose of grouping features with similar characteristics, such as standard deviation or distance between prototypes, into the same subfeature vectors. This meticulous feature sorting step is effective to align features optimally and mitigate the potential influence of outliers or features with extreme distances on the final classification decision.

In another exemplary process, the input data in step *A* further comprises a weight factor set *W* and wherein at least one of the individual classes *c* assigned in step *D* is weighted with at least one weight factor *w* among the weights factor set W when determining the predicted class *yₜₑₛₜ* in step *E.* The weighting in step D may be achieved for example by multiplying the at least one weight factor *w* with one or more of the individual classes *c*.

Weight factors applied during the voting process allow the system to emphasize more reliable subfeature vectors, enhancing the accuracy of the final classification decision
In addition, or alternatively, at least one of the calculated confidence values *Confidenceⱼ(c)* may be weighted with the at least one weight factor *w*, for example by multiplication.

Weighting confidence scores provides a refined mechanism to assess classification reliability, particularly useful in ensuring the robustness.

In another exemplary process, the method further comprises initializing a list of sub-classifiers *Sub Classifiers,* wherein the input data in step *A* further comprises a selection percentage *P%* for selecting a specific part / subset of the list of sub-classifiers *Sub Classifiers,* and wherein step *D* further comprises updating the list of sub-classifiers *SubClassifiers* with at least the assigned individual classes *c*, sorting the list of sub-classifiers *Sub Classifiers* based on at least one type of parameters for each test subfeature vector *SFV_{test,j}* generated by the at least one distance metrics-based method and selecting the specific part / subset of sub-classifiers SelectedSubClassifiers among the list of sub-classifiers SubClassifiers by use of the selection percentage *P*%.

The selection percentage *P*% may for example be chosen for selecting a top part and/or a bottom part of the list of sub-classifiers *Sub Classifiers.*

In another exemplary process, step *D* may further comprise updating the list of sub-classifiers *SubClassifiers* with at least the assigned individual classes *c* and the confidence values *Confidenceⱼ(c)* generated by the at least one distance metrics-based method, sorting the list of sub-classifiers *Sub Classifiers* based on at least the confidence values *Confidenceⱼ(c)* in a sorted order, for example descending or ascending order, and selecting the specific part, for example a top part and/or a bottom part, of sub-classifiers *SelectedSubClassifiers* among the list of sub-classifiers *Sub Classifiers* by use of the selection percentage *P%.*

The selective use of sub-classifiers based on predefined criteria ensures that only the most effective classifiers influence the final decision, thereby further addressing the feature redundancy. Moreover, Selecting sub-classifiers based on their confidence values enables a prioritization of the most accurate predictors, further address the feature redundancy.

In another exemplary process, *if* in step *A* a pretrained model set *Fₛₑₜ* is chosen comprising a plurality of pretrained models *F, then* the feature extraction of the support dataset *xᵢ* generating support feature vectors *fᵢ* and the feature extraction of the test dataset *xₜₑₛₜ* generating test feature vectors *fₜₑₛₜ* may be performed for at least two of the pretrained models *F*. Based on these feature vectors generated from different pretrained models F, step *B* may further comprise merging the support and test feature vectors *fᵢ,fₜₑₛₜ* into a concatenated support feature vector *fᵢ* and into a concatenated test feature vector *fₜₑₛₜ,* respectively. The concatenated support feature vectors *fᵢ* and the concatenated test feature vector *fₜₑₛₜ* may then be employed in steps *C* and *D*. The feature vectors *fᵢ,fₜₑₛₜ* of said merging should be limited to feature vectors of the same support and test datasets *xᵢ,xₜₑₛₜ.*

Combining features from multiple foundation models into a concatenated vector ensures a comprehensive analysis of data, capturing a broader spectrum of features and thereby enhancing the model's capability to generalize across different data types and structures.

Step *B* of the exemplary process may further comprise the steps of verifying compatibility of the at least two of the pretrained models *F* and deciding if a normalization between the at least two pretrained models *F* is desirable or necessary.

If the decision is affirmative, each of the concatenated support feature vectors *fᵢ* and each of the concatenated support feature vectors *fᵢ* extracted in step *B* may be normalized by a normalization process.

Such a normalization process may comprise calculating means *µ(fᵢ),µ(fₜₑₛₜ)* and standard deviations *σ(fᵢ),σ(fₜₑₛₜ)* and normalizing using these calculated means *µ(fᵢ),µ(fₜₑₛₜ)* and standard deviations *σ(fᵢ), σ(fₜₑₛₜ).*

Normalizing feature vectors standardizes the input data, mitigating the effects of scale disparities and enhancing model consistency and reliability.

If the at least one distance metrics-based method in step D comprises a prototypical networks *PN* method, step *C* may further comprise calculating sub-prototypes *p_{c_j}* for each individual class *c* and each support subfeature vector *SFV_{i,j}.* Step *D* may then further comprise the steps of calculating for each test subfeature vector *SFV_{test,j}* and each individual class *c* a distance *dⱼ* between the test subfeature vector *SFV_{test,j}* and the sub-prototype *p*_{*c*_*j*}, determining a minimum distance *d^{min}ⱼ* among the calculated distances *dⱼ* and setting the individual class *c* of the test subfeature vector *SFV_{test,j}* to the individual class *c* corresponding to the minimum distance *d^{min}ⱼ.*

Prototypical networks *PN* represents a simple, effective and powerful approach for utilizing features from commercially available foundation models for few-shot learning.

In another exemplary process the test dataset *xₜₑₛₜ* comprises a plurality of images showing products / objects within a certain category / type and in particular categories / types suffering from image scarcity.

Such a category may be biological objects such as animals (e.g. mammals, birds, fish, reptiles or amphibians) or human beings. For example, one classification may be to distinguish certain type of mammals such as dogs or cats. Another exemplary category may be non-living objects such as components of installations.

For example, one specific classification may be to register any anomalies on components within a power supply system by comparing non-labelled images of one type of power line component (for example power line insulators or power line conductors of unknown state) with labelled images (for example corresponding power line insulators or power line conductors of known state).

As mentioned in paragraph [002], detecting defects from limited availability of training data such as in power line inspection represent a significant challenge. Applying this novel method have the potentiality of improving the accuracy of such classification due to inter alia its highly efficient handling of the curse of dimensionality and feature redundancy.

In another exemplary process the test dataset *xₜₑₛₜ* comprises a plurality of audios. Examples of such process may be categorization of animal sounds or human languages.

In another exemplary process the test dataset *xₜₑₛₜ* comprises text. Examples of such process may be categorization of subject lines in e-mails.

In a second aspect, the invention concerns a computer-readable storage medium comprising instructions which, when executed by a computer, cause the computer to carry out the steps of the computer-implementer method as described above.

Note that all variations of the first and second aspects described above share at least the common elements,
- computation of distances in high-dimensional spaces by use distance metrics-based methods and
- employment of partitioning of high dimensional feature vectors extracted by use of pretrained foundation models.

Note further that even if the above described methods are focused on classification into a plurality of classes, the inventive methods are also effective for one-class scenarios such as anomaly detection. This one-class adaptability is achieved by measuring the distance between a test example and support examples, or functions derived from these support examples such as prototypes, centroids, sub-centroids, and nearest neighbours. If this distance is below a certain threshold, the test example is classified as belonging to the normal class, confirming it fits expected patterns. If it exceeds the threshold, it flags the example as an anomaly. This method provides a straightforward and reliable way to both detect anomalies and confirm normalcy, making it versatile for various applications with limited data.

Hence, the above mentioned classification method presents an improved approach of handling high-dimensional data compared to prior art method, and in particular classification of dataset suffering from data scarcity.

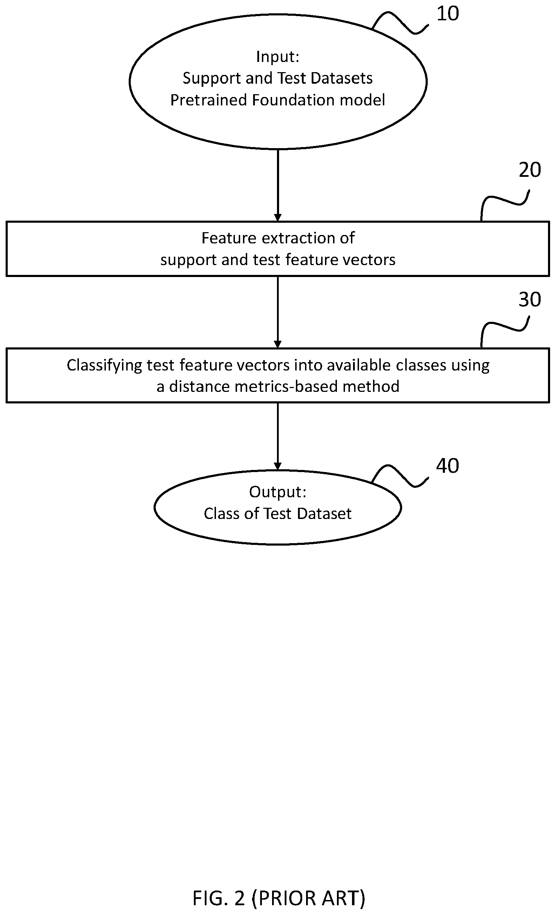

In order to address the limitations of traditional few-shot learning such as curse of dimensionality and feature redundancy, the approach presents a novel way of processing feature vectors involving dividing each feature vector into subfeature vectors and performing voting of the latter. As exemplified in paragraphs [175-179], executing a software based on this novel method results in a significant increase in classification accuracy compared to executing a software based on a prior art method as depicted in figure 2 (see below) and exemplified in algorithm 1. And this novel method is particularly suited for image classification when the number of available support and test image examples are scarce.

In the following description, numerous specific details are introduced to provide a thorough understanding of embodiments of the claimed method. One skilled in the relevant art, however, will recognize that these embodiments can be practiced without one or more of the specific details, or with other few-shot learning methods, dataset types etc.

### Brief Description of the Figures

Figure 1 schematically illustrates classification of data using a prototypical networks PN method in a few-shot learning approach, wherein figure 1A shows feature vectors in feature space forming three distinct clusters, figure 1B shows creation of prototypes for each class / cluster and figure 1C shows classification of a test image.
Figure 2 shows a prior art flow diagram for training a machine learning model to classify datasets such as images using a pretrained foundation model.
Figure 3 schematically illustrates classification of test images using Euclidean distance measurements between a test image feature vector and two support image feature vectors belonging to different classes.
Figure 4 shows a flow diagram describing a classification method in accordance with one embodiment of the invention which involves dividing feature vectors extracted by pretrained foundation model(s) into sub-feature vectors and performing subsequent voting.
Figure 5 schematically illustrates a classification method in accordance with the invention, wherein the feature vectors are divided into a plurality of sub-classifiers comprising two features / dimensions and wherein a voting system is applied on said sub-classifiers.
Figure 6 shows a flow diagram describing a classification method in accordance with a second embodiment of the invention being similar to the first embodiment, but which also involves dividing the feature vectors into subfeature vectors of potentially dissimilar number of features.
Figure 7 schematically illustrates the classification method in accordance with the method of Figure 6.
Figure 8 shows a flow diagram describing a classification method in accordance with a third embodiment of the invention being similar to the second embodiment, but which also involves sorting the feature vectors using a specific sorting technique prior to division.
Figure 9 shows a flow diagram describing a classification method in accordance with a fourth embodiment of the invention being similar to the third embodiment, but which also involves performing weighted voting.
Figure 10 shows a flow diagram describing a classification method in accordance with a fifth embodiment of the invention being similar to the fourth embodiment, but which also involves selecting a specific part of a list of sub-classifiers used in the sorting step.
Figure 11 schematically illustrates the classification method in accordance with the method of Figure 10.
Figure 12 schematically illustrates a classification method in accordance with a sixth embodiment of the invention, which involves mering feature vectors extracted from different pretrained foundation models.
Figure 13 shows a flow diagram describing the classification method of figure 12.

### Detailed Description of the Figures

Hereinafter several embodiments of the inventive method will be described outlining the steps and considerations for effectively implementing the inventive few-shot learning approach.

As mentioned above, Figure 1 illustrates a distance metrics-based classification procedure following the principles of the prototypical networks *PN* method. Moreover, the algorithm 1 describes one example of such a prior art classification procedure. Other examples of efficient distance metrics-based classification procedures (which all can be used in few-shot learning approaches using pretrained foundation models) are *k*-nearest neighbours *k-NN,* nearest centroids *NC* and nearest sub-centroids *NSC*. These distance metrics-based classification procedures are well known in the field and will thus not be described in detail.

Such classification of test datasets based on feature extraction by pretrained foundation models and analyses using distance metrics-based method is known in the field. Figure 2 provides a flow diagram illustrating the main steps of such prior art classification in which a pretrained foundation model *F* such as OpenAI's CLIP or Meta's Dinov2 forms part of the input parameters in the classification approach, in addition to support and test datasets *xₜₑₛₜ, xᵢ*. Hereinafter test dataset *xₜₑₛₜ* and support dataset *xᵢ* is defined as the data to be classified and the data setting the condition for the classification, respectively. The support dataset *xᵢ* may comprise data having the same format as the test data as well as available individual classes *c* into which the test dataset *xₜₑₛₜ* shall or could be categorized.

In particular, the prior art flow diagram of Figure 2 comprises the step of:
10: Inputting a pretrained foundation model *F* and raw data *X* into the workflow / software, wherein the raw data *X* comprises a support dataset *xᵢ* (including lables/classes *yᵢ* of the support dataset *xᵢ* and available individual classes *c*) and a test dataset *xₜₑₛₜ.*
20: Performing feature extraction of the support dataset *xᵢ* and the test dataset *xₜₑₛₜ* using the pretrained foundation model *F*, thus generating a support feature vector *fᵢ* and a test feature vector *fₜₑₛₜ*, respectively. Both feature vectors *fᵢ*, *fₜₑₛₜ* comprises a number of features / dimensions *sᵢ*,*sₜₑₛₜ*.
30: Classifying each test feature vector into available individual classes using a distance metrics-based model such as prototypical networks *PN* model, typically using Euclidean distances.
40. Outputting the resulting class *yₜₑₛₜ* of the test dataset *xₜₑₛₜ.*

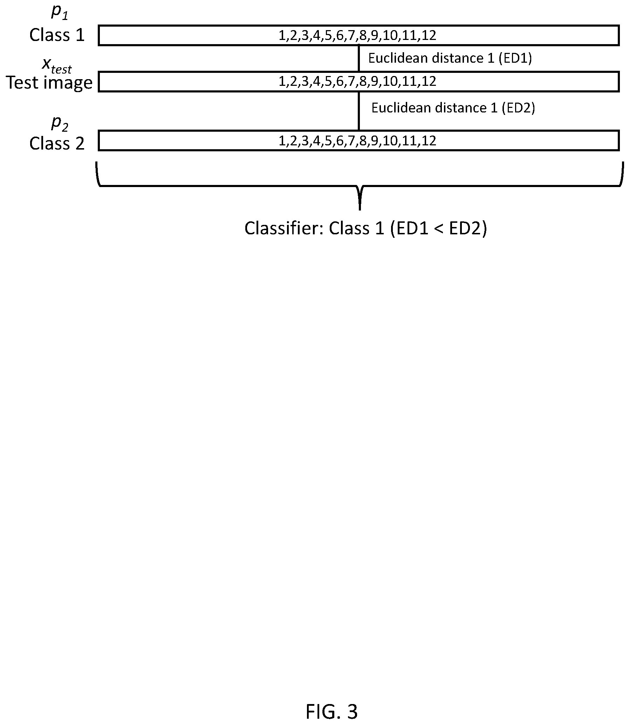

Figure 3 schematically illustrates the classification approach according to the prior art method wherein the test image *xₜₑₛₜ* may be classified into two classes, class 1 (*p_{c=1}*) and class 2 (*p_{c=2}*). When the prototype feature vectors for class 1 (*p_{c=1}*) an class 2 (*p_{c=2}*) and the test image feature vector (*fₜₑₛₜ*) has been generated by the pretrained Foundation model *F*, the Euclidean distance 1 (*ED1*) between *p_{c=1}* and *fₜₑₛₜ* and the Euclidean distance 2 (*ED2*) between *p_{c=2}* and *fₜₑₛₜ* is calculated, and the classification of the test image *xₜₑₛₜ* is chosen for the smallest of *ED1* and ED2. In this case, test image *xₜₑₛₜ* is classified to class 1 since ED1 is less than *ED2.* The predicted class is thus *yₜₑₛₜ* = class 1.

A prototype feature vector *p_{c}* is herein essentially the mean of all feature vectors within a specific class *c*, thereby serving as a representative point in the feature space for that class.

In algorithm 1 shown above, the above described calculations and comparisons of Euclidean distances are found in lines 7 and 8. After allocating a class *yₜₑₛₜ* to the test image *xₜₑₛₜ,* the confidence score *Confidence(c)* may be calculated using *Softmax* (lines 10-11).

As discussed above this prior art classification approach suffers from several disadvantages.

In order to mitigate these disadvantages, a novel classification approach is introduced that involves dividing the feature vectors into subfeature vectors, followed by generating sub-classifiers as basis for subsequent voting. This inventive approach not only reduce number of features / dimensions to be analyzed, and thus solving a variety of challenges concerned with high-dimensional spaces. The approach specifically reduces the challenges concerned with both the curse of dimensionality and the issues of feature redundancy, as will be apparent in the below described examples.

Algorithm 2 shown below provides a specific, non-limiting example of how such divisions into sub-classifiers of a certain size and a subsequent voting may be programmed, wherein the classification is based on prototypical networks PN method. In algorithm 2 *p_{cⱼ}* and *y_{testⱼ}* represents prototype for each class for each subfeature segment and classification of the corresponding test subfeature segment, respectively.

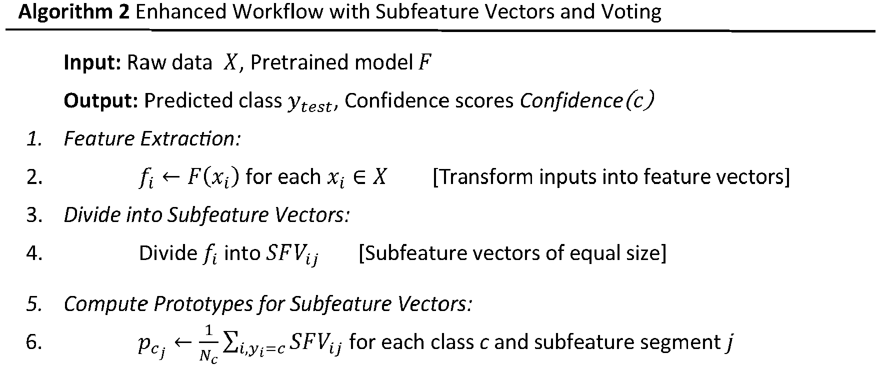

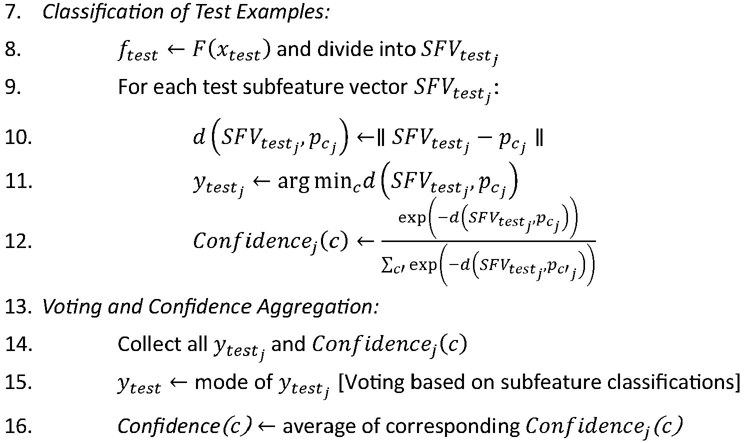

The main differences between algorithm 1 (providing an example of a prior art classification) and algorithm 2 (providing an example of an inventive classification via subfeature vectors / sub-classifiers) are seen in line 4 where support feature vectors *fᵢ* are divided into subfeature vectors *SFV_{i,j}* of size *s_{SF}*), in line 8 where the test image feature vectors *fₜₑₛₜ* are into subvector *SFV_{test,j}* of same size *s_{SF}* and in line 15 where the voting of the individual results are performed.

In algorithm 2, the feature vectors *fᵢ* are used to calculate support subfeature vectors *SFV_{i,j}* which again are applied when calculating prototype subfeature vectors.

Alternatively, prototypes *p_{c}* may be calculated directly from the support feature vectors *fᵢ*, wherein these prototypes *p_{c}* are divided into prototype subfeature vectors *p_{c,j}*. In terms of processing speed the former approach (calculate prototypes *p_{c}* first and store them) may be preferable in terms of processing speed since there will be no need to recalculate prototypes *p_{c}* if duplications of feature vectors are performed (see further details below).

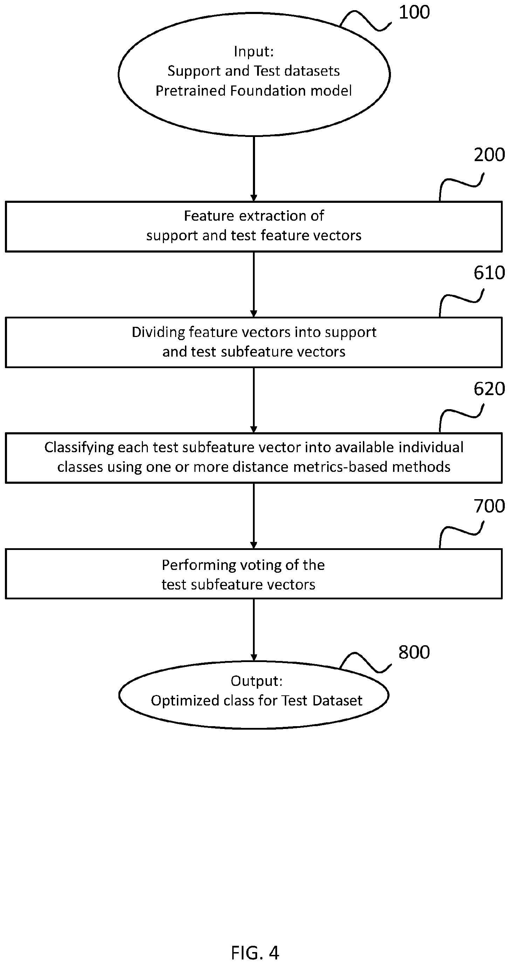

Figure 4 presents a flow diagram of an example of the inventive method which comprises the following steps:
100: Inputting a pretrained foundation model *F* and raw data *X* into the workflow / software, wherein the raw data *X* comprises a support dataset *xᵢ* (including available individual classes c) and a test dataset *xₜₑₛₜ.*
200: Performing feature extraction of the support dataset *xᵢ* and the test dataset *xₜₑₛₜ* using the pretrained foundation model F, thus generating a support feature vector *fᵢ* and a test feature vector *fₜₑₛₜ,* respectively. Both feature vectors *fᵢ,fₜₑₛₜ* involves sizes having a number of features / dimensions *sᵢ,sₜₑₛₜ,* wherein *sᵢ* and *sₜₑₛₜ* are positive integers of 1 or more, for example 10, 100 or 1000. The size s; for each support feature vector is typically equal to the size *sₜₑₛₜ* for the corresponding test feature vector.
610: Dividing the support feature vector *fᵢ* and the extracted test feature vector *fₜₑₛₜ* into a number of support subfeature vectors *SFV_{i,j}* of fixed size *s_{SF,j}* and a number of test subfeature vectors *SFV_{test,j}* of fixed size *s_{SF,test}*, respectively.
620: Classifying each of the test subfeature vectors *SFV_{test,j}* into at least some of the available individual classes c specified in the support dataset *xᵢ* by applying one or more of the distance metrics-based methods such as a prototypical networks *PN* method or a nearest sub-centroid *NSC* method.
700: Performing voting of the test subfeature vectors *SFV_{test,j}* to determine a resulting class *yₜₑₛₜ.* The voting may be a majority voting or a weighted voting (see below).
800: Outputting the resulting class *yₜₑₛₜ* of the test dataset *xₜₑₛₜ.*

For the flow diagram above, and all flow diagrams described in the following, the sequence of steps may be interchanged if this is not influencing the final result, i.e. resulting class *yₜₑₛₜ.*

If prototypical networks *PN* method is chosen (as in algorithm 2), the classifying step would involve calculating sub-prototypes *p_{c,j}* for each individual class and each support feature vector, and determining minimum distances between the test subfeature vectors and the calculated sub-prototypes *p_{c,j}* for each class *c.*

Alternatively, or in addition, if nearest sub-centroid *NSC* method is chosen, the classification comprises calculating a plurality of sub-centroids for each individual class *c* and classifying each test subfeature vector *SFV_{test,j}* into the individual classes *c* by determining the nearest sub-centroid to the subfeature vector *SFV_{test,j}* in question.

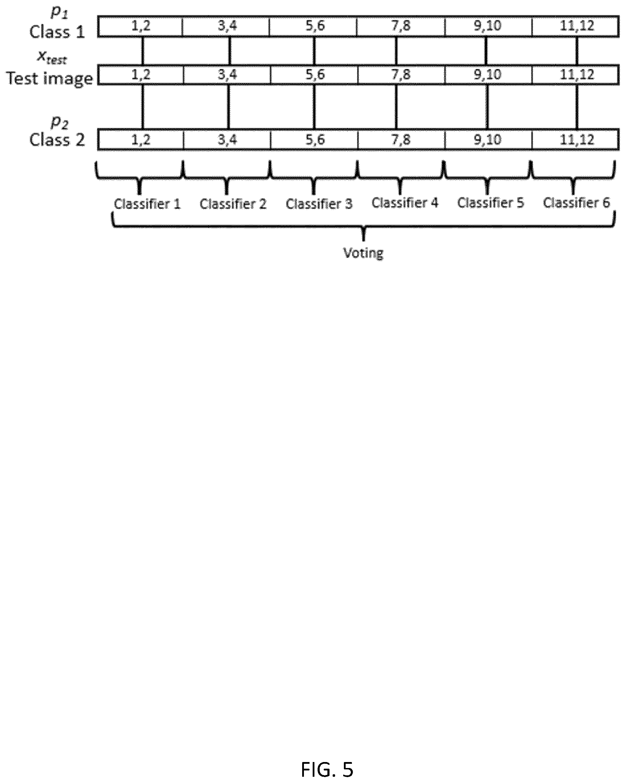

Figure 5 schematically illustrates the classification approach according to the inventive method disclosed in Figure 4 and exemplified in Algorithm 2. As for the example shown in Figure 3, the test image *xₜₑₛₜ* may be classified into two classes, class 1 (*p_{c=1}*) and class 2 (*p_{c=2}*) after having been calculating prototypes *p₁,p₂* of the support feature vectors *fᵢ* for each class *c* and dividing the prototypes *p₁,p₂* and the test feature vector *fₜₑₛₜ* into *j*=6 subfeature vectors *p_{c,j}, SFV_{test.j},* each containing two features / dimensions (*s*=2).

In this example, the number of subfeature vectors *SFV_{test,j}, SFV_{i,j}* equals the number of sub-classifiers used for the subsequent voting.

Suitable pretrained foundation models, for example Meta's Dinov2 or OpenAI's CLIP, allow extraction of a comprehensive set of feature vectors from such images *xᵢ,xₜₑₛₜ,* effectively capturing underlying image patterns and nuances.

For example, the support dataset *xᵢ* and the test dataset *xₜₑₛₜ* may be images of specific artifacts such as defects in power line components.

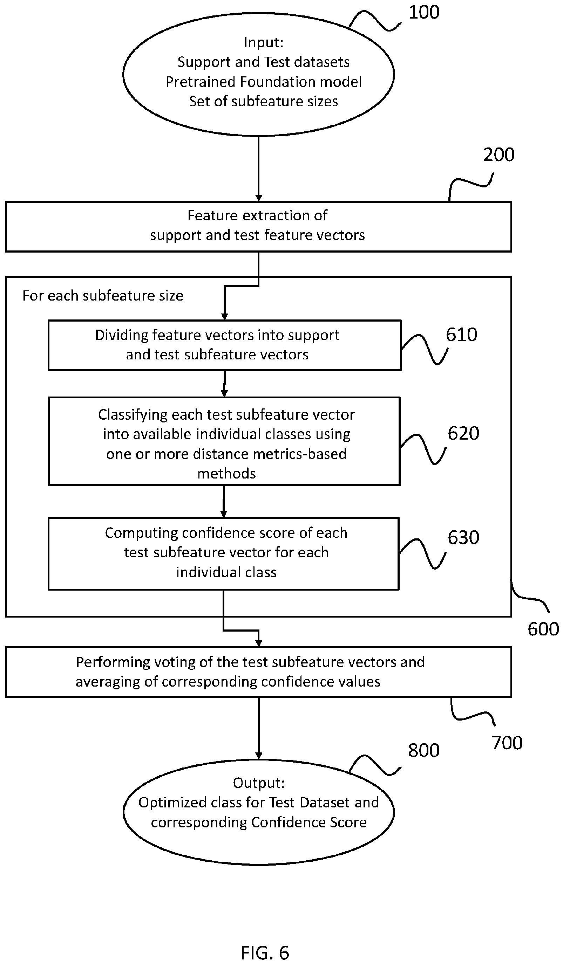

The flow diagram in Figure 6 and the algorithm 3 shown below provides another specific, non-limiting example of a classification approach according to the invention, wherein the support and test feature vectors *fᵢ,tₜₑₛₜ* are divided into subfeature vectors *SFV_{i,j}, SFV_{test,j}* of dissimilar sizes *s_{SF,j}.*

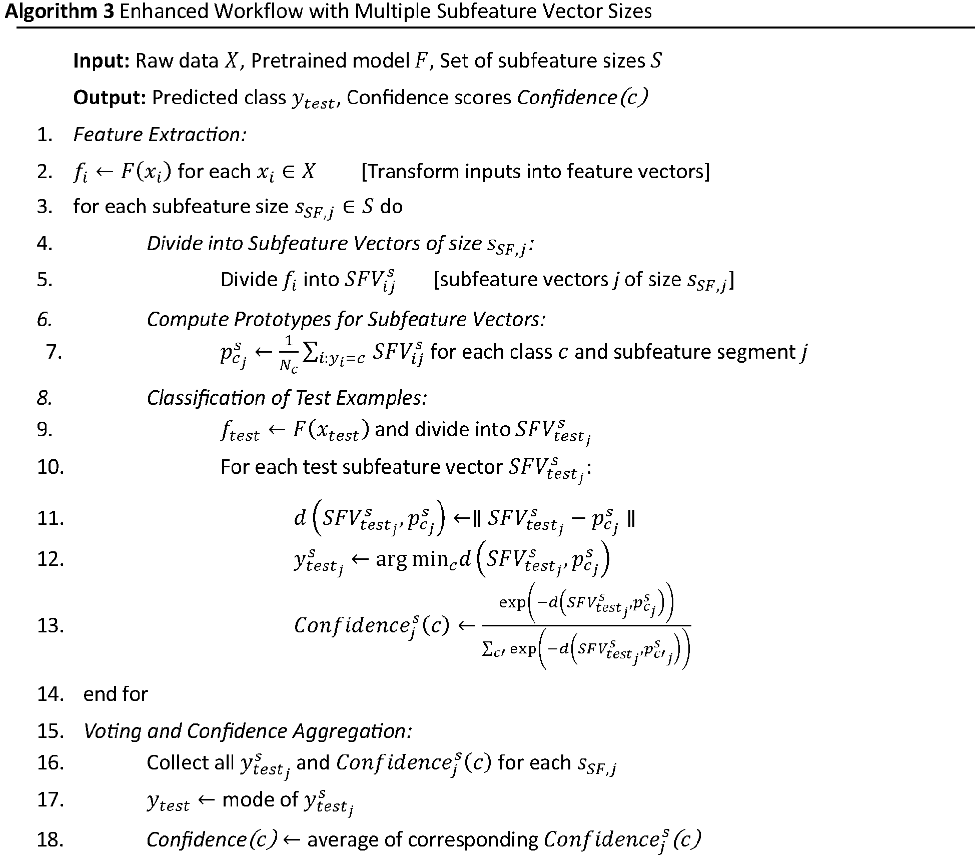

As for algorithm 2 the confidence value *Confidence(c)* is set as the average of the confidence values for the various subfeature vectors *SFV_{test,j}* /sub-classifiers.

Following algorithm 3, the flow diagram of figure 6 comprises the following steps:
100: Inputting a pretrained foundation model *F* and raw data *X* into the workflow / software, wherein the raw data *X* comprises a support dataset *xᵢ* (including available individual classes c and sizes of each subfeature vectors *s_{SF,j}*) and a test dataset *xₜₑₛₜ*.
200: Performing feature extraction of the support dataset *xᵢ* and the test dataset *xₜₑₛₜ* using the pretrained foundation model *F,* thus generating a support feature vector *fᵢ* and a test feature vector *fₜₑₛₜ,* respectively. Both feature vectors *fᵢ*, *fₜₑₛₜ* involves sizes having a number of features / dimensions *sᵢ,sₜₑₛₜ,* wherein *sᵢ* and *sₜₑₛₜ* are positive integers of 1 or more, for example 10, 100 or 1000. The size *sᵢ* for each support feature vector is typically equal to the size *sₜₑₛₜ* for the corresponding test feature vector.
600: Classifying test subfeature vector and computing corresponding confidence scores for each subfeature size *s_{SF,j},* wherein step 600 comprises
610: Dividing the support feature vector *fᵢ* and the extracted test feature vector *fₜₑₛₜ* into a number of support subfeature vectors *SFV_{i,j}* of sizes *s_{SF,j}* and a number of test subfeature vectors *SFV_{test,j}* of sizes *s_{SF,test}.* Each size *s_{SF,test}* of the test subfeature vectors *SFV_{test,j}* corresponds to an equal size *s_{SF,j}* of the support subfeature vectors *SFV_{i,j}.*
620: Classifying each of the test subfeature vectors *SFV_{test,j}* into at least some of the available individual classes *c* specified in the support dataset *xᵢ* by applying one or more of the distance metrics-based methods such as a prototypical networks *PN* method or a nearest sub-centroid *NSC* method.
630: Computing confidence score *confidenceⱼ(c)* of each test subfeature vector *SFV_{test,j}* and each of the chosen individual classes *c* chosen in step 620.
700: Performing voting of the test subfeature vectors *SFV_{test,j}* to determine a resulting class *yₜₑₛₜ.* The voting may be a majority voting or a weighted voting.
800: Outputting the resulting class *yₜₑₛₜ* of the test dataset *xₜₑₛₜ.*

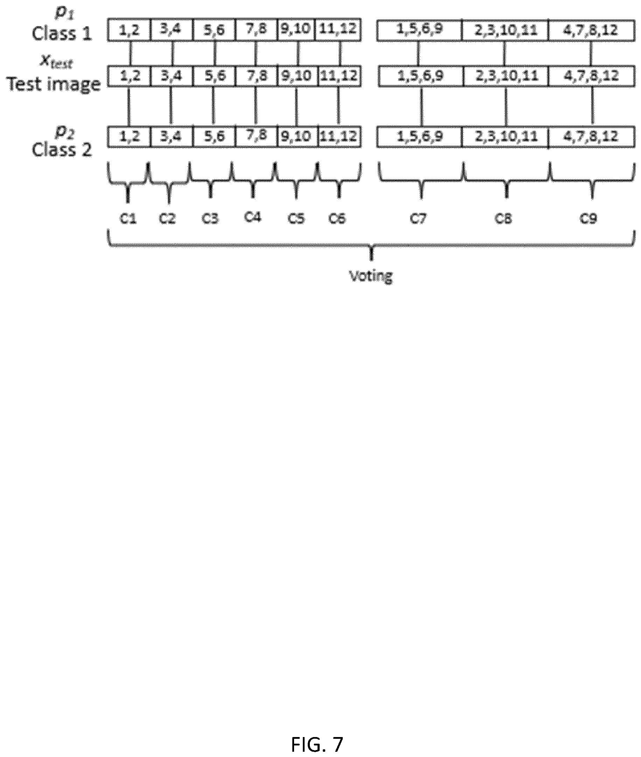

Figure 7 schematically illustrates the classification approach according to the inventive method disclosed in Figure 6 and exemplified in Algorithm 3. As for the example shown in Figures 3 and 5, the test image *xₜₑₛₜ* may be classified into two classes, class 1 (*p_{c=1}*) and class 2 (*p_{c=2}*). After classification of each test subfeature vector *SFV_{test,j}* (for example based on prototypical networks *PN* method involving calculating sub-prototypes *p_{c,j}* of the support subfeature vectors *SFV_{i,j}*), voting are performed on the different subfeature vectors *SFV_{i,j}* / sub-classifiers to find an optimized class *yₜₑₛₜ* for the test dataset xₜₑₛₜ. Further, the corresponding confidence score *Confidence(c)* is calculated by averaging the confidence scores of each test subfeature vector *Confidenceⱼ(c).*

### Sorting techniques for enhanced feature analysis

In order to further enhance the precision and effectiveness of the innovative method, advanced sorting technique may be employed for the features of the original support feature vectors *fᵢ*, before dividing them into subfeature vectors *SFV^{s}ᵢⱼ*.

The sorting ensures that features in feature vectors *fᵢ, fₜₑₛₜ* having similar characteristics are grouped into a common cluster, thereby contributing to mitigate the potential influence of outliers or features having extraordinary large distances during the final classification decision (see specific example below). For example to recognize a car, features recognizing wheels, car doors, car shapes, car windows etc. are needed and these features should ideally be placed in the same cluster.

Such strategic sorting process may be achieved by sorting the features in feature vectors *fᵢ* having similar standard deviation *σ(fᵢ)* and/or distance *d_{avg}(p_{c})* between prototypes *p_{c}*. When the feature vectors *fᵢ* are divided into subfeature vectors *SFV^{s}_{i,j}*, features having such similarities are as a consequence grouped into the same subfeature vectors *SFV^{s}ᵢⱼ*.

### Standard Deviation Sorting

Standard deviation sorting involves calculating the standard deviation *σ* of the features within the support feature vectors *fᵢ* and subsequently sort the derived standard deviations *σ(fᵢ)* to achieve sorted indices. Finally, the features within the feature vectors *fᵢ* are sorted according to these sorted indices leading to a more coherent contributions to the classification process.

The weight/influence of individual features with exceptionally high or low standard deviations are thus reduced during the overall decision-making. Note that any quantisation of 'exceptionally high or low standard deviations' must be decided for each task and is governed by the goal of achieving an optimal clustering of features with similar standard deviations, and thus avoiding erroneous classification decisions.

Algorithm 4 shown below provides an example of how the calculation of standard deviation *σⱼ* may be programmed across all feature vectors *f_{new}* in support set *Fₛᵤₚₚₒᵣₜ* and the subsequent sorting.

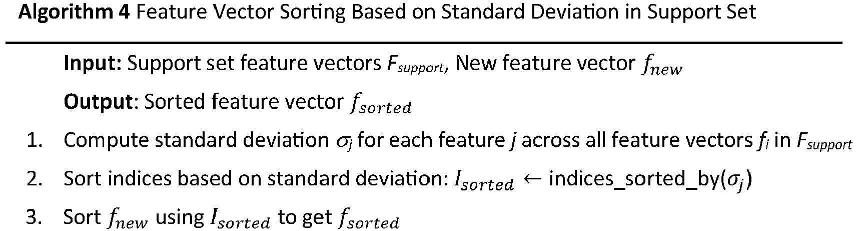

### Distance Sorting in Prototypical Networks PN method

In the distance sorting methodology, the distances between prototypes *p_{c}* are emphasized in the calculation, whether it be for binary classification scenarios involving positive class (e.g. defect class) and negative class (e.g. non-defect class) or for cases with more than two classes.

For each prototype feature / dimension, the average distance *d_{avg}(fᵢ)* between the prototypes *p_{c}* are calculated for each dimension separately, taking into account all individual classes *c.* These average distances *d_{avg}* are then used as the basis for sorting the features, resulting in sorted indices *I_{sorted}.*

Subsequently, these sorted indices *I_{sorted}* are employed to organize the features within the feature vectors *fᵢ*.

This approach effectively groups features with similar average distances together, ensuring a balanced and controlled impact of features with extreme distances during the classification process, regardless of the number of classes involved.

Algorithm 5 shown below provides an example of how distance and subsequent sorting may be programmed.

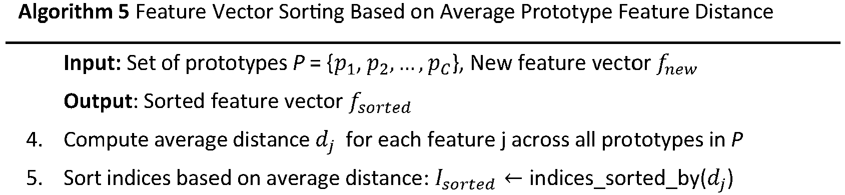

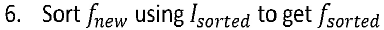

Hence, by incorporating an array of sorting techniques such as the distance sorting into the inventive method significantly enhances the model's capability to discern intricate relationships within the data.

This enhancement not only mitigates the influence of outlier features but also ensures a comprehensive analysis of feature interdependencies.

By meticulously organizing the features prior to segmenting them into subfeature vectors *SFV^{s}_{i,j},* the methodology has the capability of harnessing the full potential of the feature sets, irrespective whether or not the subfeature vectors *s_{SF,j}* are of equal or dissimilar sizes.

While the exemplary embodiments disclosed herein employs sorting techniques based on standard deviations *σⱼ* and/or average distances *d_{avg}* between prototypes *p_{c}*, the framework is inherently designed to accommodate a diverse spectrum of sorting techniques. These include, but are not limited to, sorting based on correlation between features/dimensions, weighted feature importance (as determined by various feature selection algorithms), and other statistical or machine learning-based sorting methodologies.

Algorithm 6 shown below provides a detailed example of how division into sub-classifiers of possibly different sizes *s_{SF,j}* may be made after sorting of features / dimensions using a specific sorting technique *t* from a set of sorting techniques *T* (e.g. by standard deviation or distance) and subsequent voting of the generated sub-classifiers.

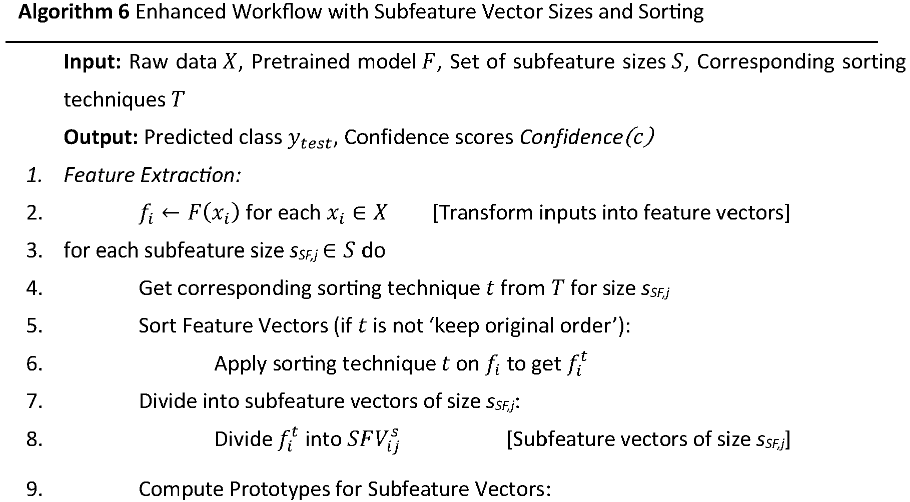

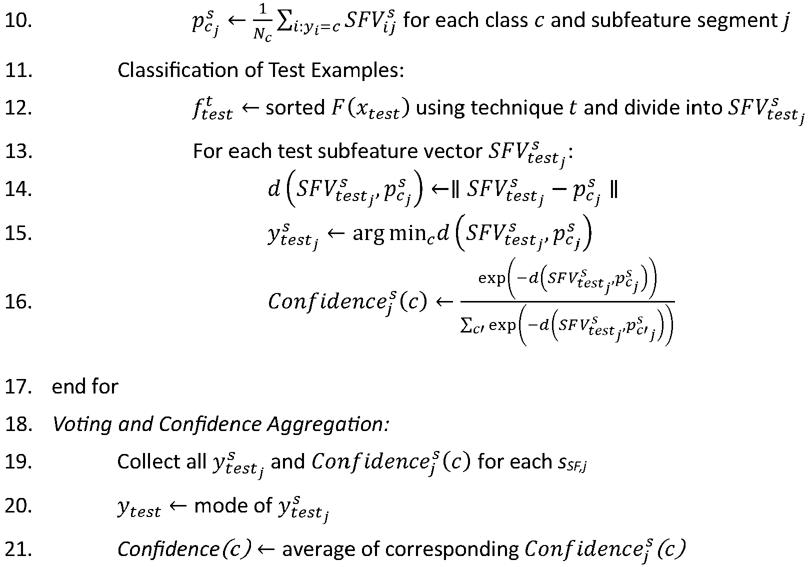

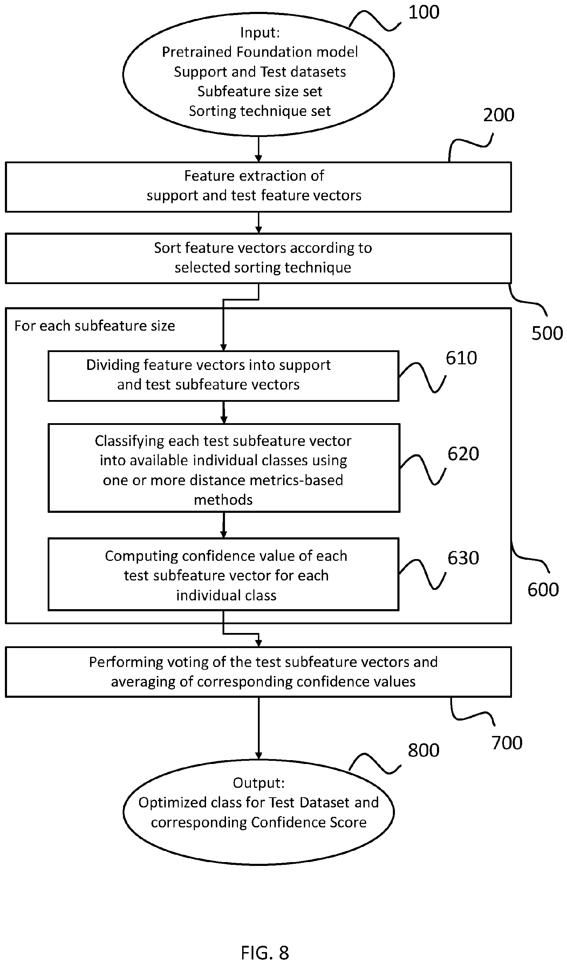

Following algorithm 6, the flow diagram of Figure 8 comprises the following steps:
100: Inputting a pretrained foundation model *F*, raw data *X* and sorting technique set *T* into the workflow / software. The raw data *X* comprises a support dataset *xᵢ* (including available individual classes cand sizes of each subfeature vectors *s_{SF,j}*) and a test dataset *xₜₑₛₜ.* The sorting technique set *T* comprises one or more specific sorting techniques *t* for sorting feature vectors extracted by the pretrained foundation model *F* in step 200.
200: Performing feature extraction of the support dataset *xᵢ* and the test dataset *xₜₑₛₜ* using the pretrained foundation model *F*, thus generating a support feature vector *fᵢ* and a test feature vector *fₜₑₛₜ,* respectively. Both feature vectors *fᵢ*, *fₜₑₛₜ* involves sizes having a number of features / dimensions *sᵢ,sₜₑₛₜ,* wherein *sᵢ* and *sₜₑₛₜ* are positive integers of 1 or more, for example 10, 100 or 1000. The size *sᵢ* for each support feature vector is typically equal to the size *sₜₑₛₜ* for the corresponding test feature vector.
500: Sorting the feature vectors extracted in step 200 according to selected sorting technique t, for example based on standard deviations *σⱼ* or based on average distances *d_{avg}.*
600: Classifying test subfeature vector *SFV_{test,j}* and computing corresponding confidence scores *Confidenceⱼ(c)* for each subfeature size, wherein step 600 comprises
610: Dividing the extracted support feature vector *fᵢ* and the extracted test feature vector *fₜₑₛₜ* into a number of support subfeature vectors *SFV_{i,j}* of sizes *s_{IF,i}* and a number of test subfeature vectors *SFV_{test,j}* of sizes *s_{SF,test}.* Each size *s_{SF,test}* of the test subfeature vectors *SFV_{test,j}* corresponds to an equal size *s_{SF,j}* of the support subfeature vectors *SFV_{i,j}.*
620: Classifying each of the test subfeature vectors *SFV_{test,j}* into at least some of the available individual classes *c* specified in the support dataset *xᵢ* by applying one or more of the distance metrics-based methods such as a prototypical networks *PN* method or a nearest sub-centroid *NSC* method.
630: Computing confidence score *Confidenceⱼ(c)* of each test subfeature vector *SFV_{test,j}* and each of the chosen individual classes c chosen in step 710.
700: Performing voting of the test subfeature vectors *SFV_{test,j}* to determine a resulting class *yₜₑₛₜ* and averaging corresponding confidence values *Confidenceⱼ(c).* The voting may be a majority voting or a weighted voting.
800: Outputting the resulting class *yₜₑₛₜ* of the test dataset *xₜₑₛₜ* and corresponding confidence score *Confidence(c).*

### Weight assignment for subfeature vectors of varying sizes s_{SF,j}

In an exemplary embodiment the subfeature vectors *SFV^{s}_{i,j}, SFV^{s}_{test,j}* extracted from the feature vectors *fᵢ*, *fₜₑₛₜ* may be assigned different weights w based on their sizes *s_{SF,j}* in order to optimize the few-shot learning.

These weights *w* may then be applied both in the voting process and in calculating confidence scores.

During weighing, larger subfeature vectors, i.e. containing more features/dimensions, may receive higher weights then smaller subfeature vectors, and vice versa. Weighing may also be determined through empirical experiments, e.g. by picking out some values and choosing the optimal value for each task (similar to parameter tuning during training of a foundation model).

Such weighing ensures a more balanced and accurate contribution to the final classification, thereby enhancing the reliability of confidence scores, particularly in high-dimensional data scenarios.

Moreover, the weighing embodiment offers flexibility in weight adjustments for different datasets, thus enhancing its versatility and effectiveness.

The algorithm 7 shown below provides a detailed example of how division into sub-classifiers of different sized subfeature vectors *SF_{test,j}, SFᵢⱼ* may be made after sorting and subsequent voting (see previous description).

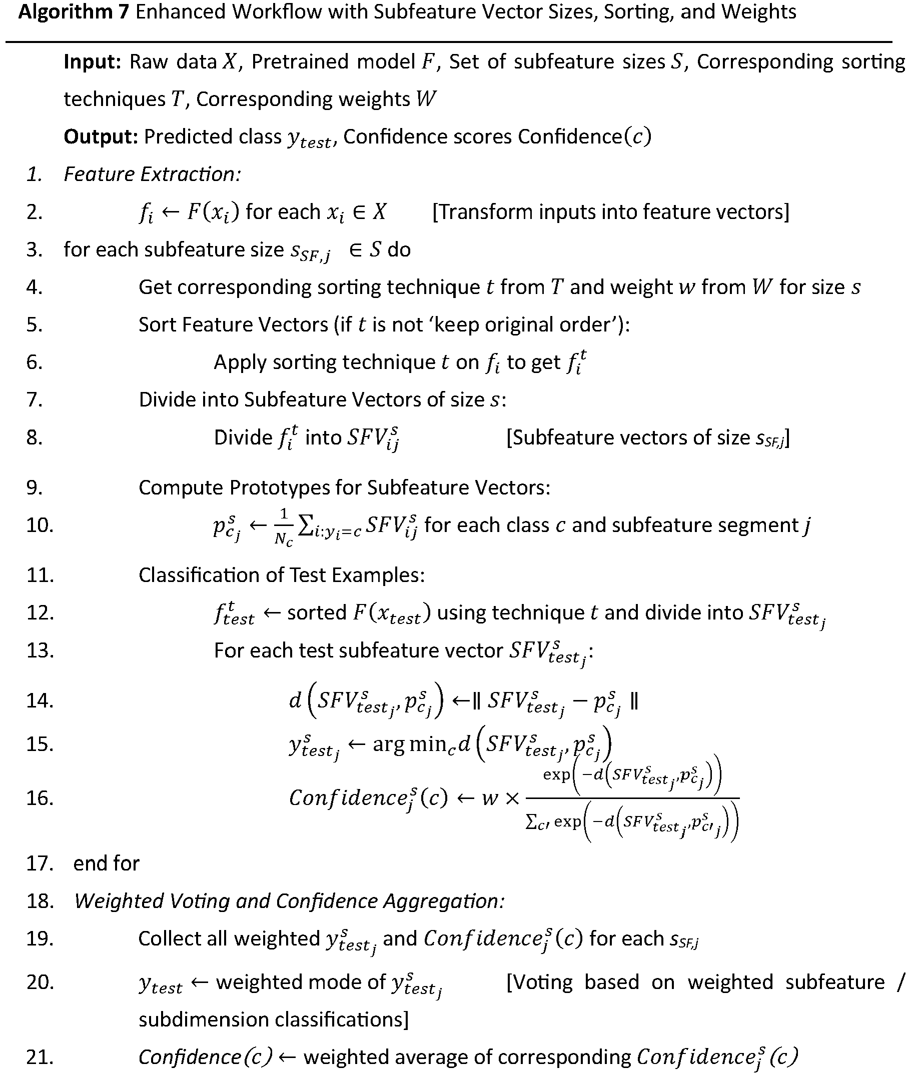

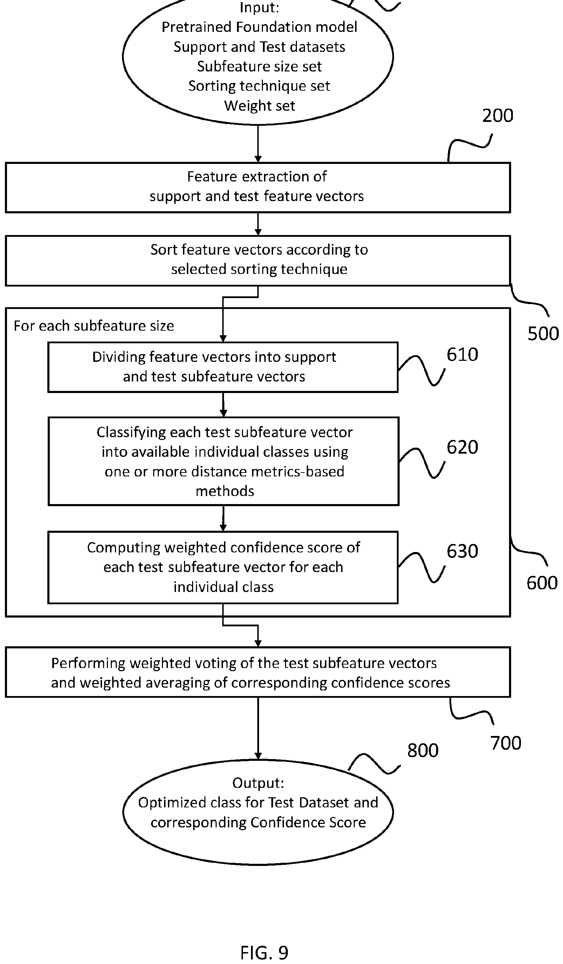

Following algorithm 7, the flow diagram of Figure 9 comprises the following steps:
100: Inputting a pretrained foundation model *F*, raw data *X,* sorting technique set *T* and weight set *W* into the workflow / software. The raw data *X* comprises a support dataset *xᵢ* (including available individual classes *c* and sizes of each subfeature vectors *s_{SF,j}*) and a test dataset *xₜₑₛₜ.* The sorting technique set *T* comprises one or more specific sorting techniques *t* for sorting feature vectors extracted by the pretrained foundation model *F* in step 200. The weight set *W* comprises desired weights modifying the voting of the sub-classifiers and the confidence scores.
200: Performing feature extraction of the support dataset *xᵢ* and the test dataset *xₜₑₛₜ* using the pretrained foundation model *F*, thus generating a support feature vector *fᵢ* and a test feature vector *fₜₑₛₜ,* respectively. Both feature vectors *f_{i,}fₜₑₛₜ* involves sizes having a number of features / dimensions *sᵢ,sₜₑₛₜ,* wherein *sᵢ* and *sₜₑₛₜ* are positive integers of 1 or more, for example 10, 100 or 1000. The size *sᵢ* for each support feature vector is typically equal to the size *sₜₑₛₜ* for the corresponding test feature vector.
500: Sorting the feature vectors extracted in step 200 according to selected sorting technique t, for example based on standard deviations *σⱼ* or based on average distances *d_{avg}.*
600: Classifying each test subfeature vector *SFV_{test,j}* and computing corresponding confidence scores *ConfidenceⱼI* for each subfeature size, wherein step 600 comprises
610: Dividing the extracted support feature vector *fᵢ* and the extracted test feature vector *fₜₑₛₜ* into a number of support subfeature vectors *SFV_{i,j}* of sizes *s_{SF,j}* and a number of test subfeature vectors *SFV_{test,j}* of sizes *s_{SF,test}.* Each size *s_{SF,test}* of the test subfeature vectors *SFV_{test,j}* corresponds to an equal size *s_{SF,j}* of the support subfeature vectors *SFV_{i,j}.*
620: Classifying each of the test subfeature vectors *SFV_{test,j}* into at least some of the available individual classes *c* specified in the support dataset *xᵢ* by applying one or more of the distance metrics-based methods such as a prototypical networks *PN* method or a nearest sub-centroid *NSC* method.
630: Computing weighted confidence score *Confidenceⱼ(c)* of each test subfeature vector *SFV_{test,j}* and each of the chosen individual classes c chosen in step 620, wherein the degree of weight is set by the weight set *W.*
700: Performing weighted voting of the test subfeature vectors *SFV_{test,j}* to determine a resulting class *yₜₑₛₜ* and weighted averaging corresponding confidence values *Confidenceⱼ(c).* The voting may be a majority voting and/or a weighted voting, wherein the degree of weight is set by the weight set *W.*
800: Outputting the resulting class *yₜₑₛₜ* of the test dataset *xₜₑₛₜ* and corresponding confidence score *Confidence(c).*

### Addressing the loss of global feature relationships

By combining advanced feature extraction capabilities of foundation models *F* with simplicity and effectiveness of distance metrics based methods such as *PNs* as described above, these inventive methods offer a powerful solution for few-shot learning tasks, enabling accurate and efficient classification with limited data.

However, another notable challenge with dividing feature vectors into subfeature vectors is the potential loss of global feature relationships.

This particular challenge may be mitigated by performing the additional steps of
- multiplying (for example duplicating) the original feature vectors *fᵢ* and *fₜₑₛₜ* into n**fᵢ* and *n*fₜₑₛₜ,* respectively and
- dividing the duplicated vectors into differently sized subfeature vectors *SFV_{i,j}* determined through empirical experimentations/tests for each task to be solved., wherein such empirical experimentation is performed to ensure that optimized sizes of the subfeature vectors *SFV^{S}_{i,j},SFV^{S}_{test,j}* are continuously employed.

### Selection of sub-classifiers

In another exemplary embodiment a selective approach of using sub-classifiers are provided, where only those with the highest confidence scores may be considered. The overall model reliability is thus enhanced since only the most accurate classifiers are considered.

The algorithm 8 shown below provides a detailed example of implementing the embodiment with pre-selection of sub-classifiers for voting (see in particular lines 20-22) .

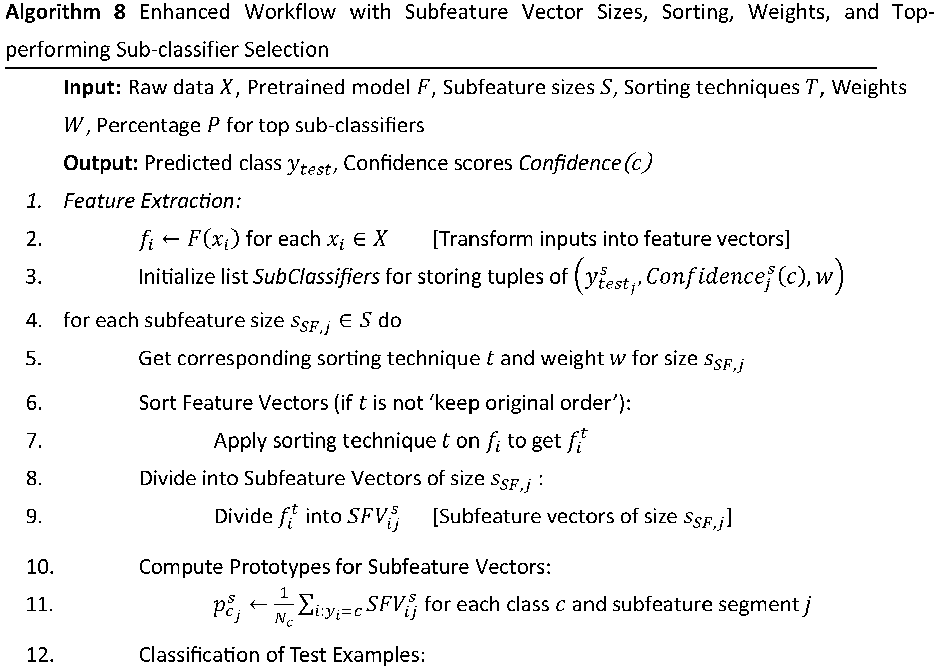

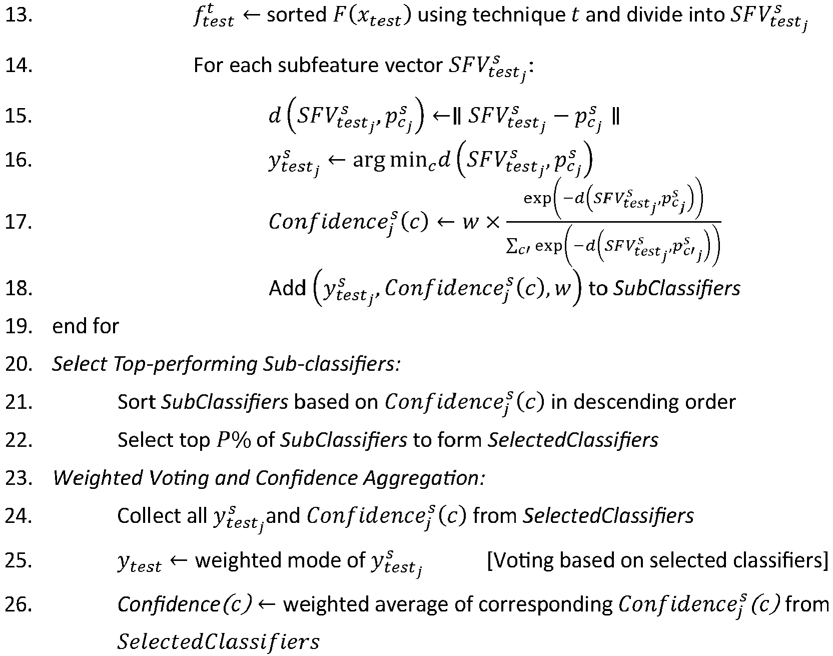

As seen in lines 24 and 26, the predicted class *yₜₑₛₜ* and the confidence score *Confidence(c)* is based on *SelectedClassifiers.*

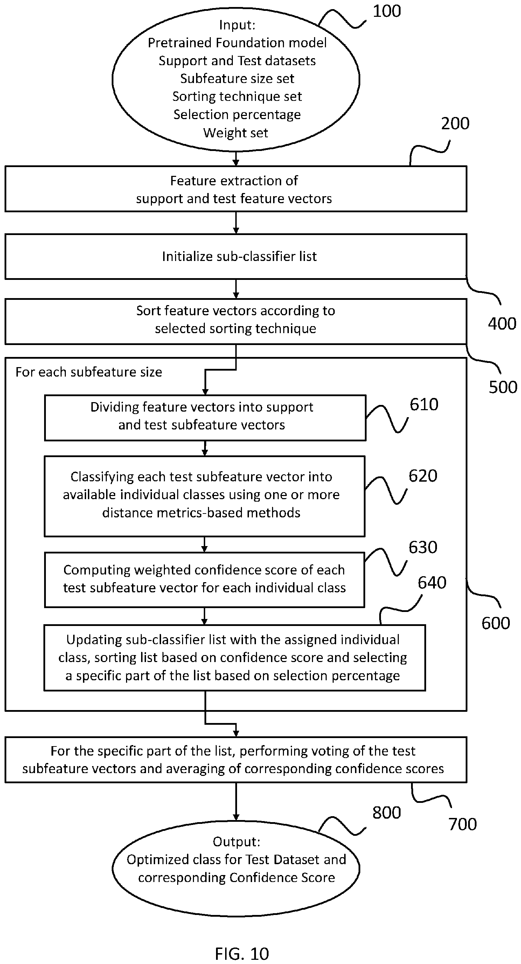

Following algorithm 8, the flow diagram of Figure 10 comprises the following steps:
100: Inputting a pretrained foundation model *F*, raw data *X,* sorting technique set *T,* weight set *W* and Selection Percentage *%P* into the workflow / software. The raw data *X* comprises a support dataset *xᵢ* (including available individual classes *c* and sizes of each subfeature vectors *s_{SF,j}*) and a test dataset *xₜₑₛₜ.* The sorting technique set *T* comprises one or more specific sorting techniques t for sorting feature vectors extracted by the pretrained foundation model *F* in step 200. The weight set *W* comprises desired weights modifying the voting of the sub-classifiers and the confidence scores. The selection percentage *%P* provides information which part of a generated sub-classifier list that shall be selected prior to determining the selected class *yₜₑₛₜ* and the corresponding confidence score *Confidence(c).*
200: Performing feature extraction of the support dataset *xᵢ* and the test dataset *xₜₑₛₜ* using the pretrained foundation model *F*, thus generating a support feature vector *fᵢ* and a test feature vector *fₜₑₛₜ,* respectively. Both feature vectors *fᵢ*, *fₜₑₛₜ* involve sizes having a number of features / dimensions *sᵢ,sₜₑₛₜ,* wherein *sᵢ* and *sₜₑₛₜ* are positive integers of 1 or more, for example 10, 100 or 1000. The size *sᵢ* for each support feature vector is typically equal to the size *sₜₑₛₜ* for the corresponding test feature vector.
400. Initializing a sub-classifier list *SubClassifiers* for storing tuples of predicted class for each test subfeature vector, *c*, corresponding confidence score *Confidenceⱼ(c)* and weight *w.*
500: Sorting the feature vectors extracted in step 200 according to selected sorting technique *t*, for example based on standard deviations *σⱼ* or based on average distances *d_{avg}.*
600: Classifying each test subfeature vector *SFV_{test,j}* and computing corresponding confidence scores *Confidenceⱼ(c)* for each subfeature size *s_{SF,j},* wherein step 600 comprises
610: Dividing the extracted support feature vector *fᵢ* and the extracted test feature vector *fₜₑₛₜ* into a number of support subfeature vectors *SFV_{i,j}* of sizes *s_{SF,j}* and a number of test subfeature vectors *SFV_{test,j}* of sizes *s_{SF,test}.* Each size *s_{SF,test}* of the test subfeature vectors *SFV_{test,j}* corresponds to an equal size *s_{SF,j}* of the support subfeature vectors *SFV_{i,j}.*
620: Classifying each of the test subfeature vectors *SFV_{test,j}* into at least some of the available individual classes *c* specified in the support dataset *xᵢ* by applying one or more of the distance metrics-based methods such as a prototypical networks *PN* method or a nearest sub-centroid *NSC* method.
630: Computing weighted confidence score *Confidenceⱼ(c)* of each test subfeature vector *SFV_{test,j}* and each of the chosen individual classes *c* chosen in step 620, wherein the degree of weight is set by the weight set *W.*
640: Updating sub-classifier list *SubClassifiers* with determined class *c*, confidence score *Confidenceⱼ(c)* and weight *w.*
700: Performing weighted voting of the test subfeature vectors *SFV_{test,j}* to determine a resulting class *yₜₑₛₜ* and weighted averaging corresponding confidence values *Confidenceⱼ(c).* The voting may be a majority voting and/or a weighted voting, wherein the degree of weight is set by the weight set *W.*
800: Outputting the resulting class *yₜₑₛₜ* of the test dataset *xₜₑₛₜ* and corresponding confidence score *Confidence(c).*

Note again that sequence of certain steps may be changed without jeopardizing the results. E.g. the sorting step may be performed after the dividing step.

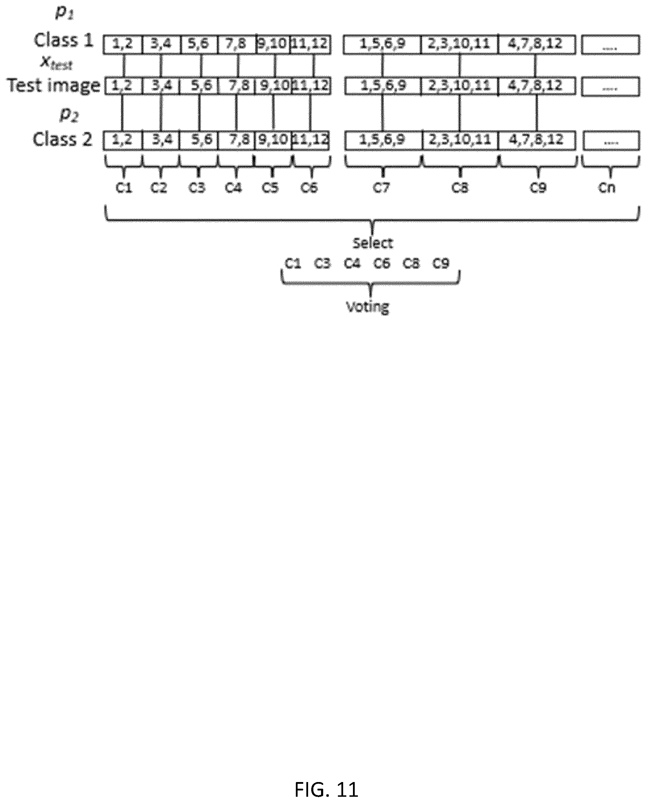

Figure 11 schematically illustrates the classification approach according to the inventive method disclosed in Figure 10 and exemplified in algorithm 8. As for the example shown in Figures 3, 5 and 7, the test image *xₜₑₛₜ* may be classified into two classes, class 1 (*p_{c=1}*) and class 2 (*p_{c=2}*). The subsequent voting however is performed only among Sub-Classifiers having the highest confidence scores, wherein the selection criteria are set by the predetermined selection percentage %*P*. If the determined list of sub-classifiers are sorted by descending confidence scores, the selection percentage %*P* is preferably a top part of the sub-classifier list.

### Combining features from multiple foundation models

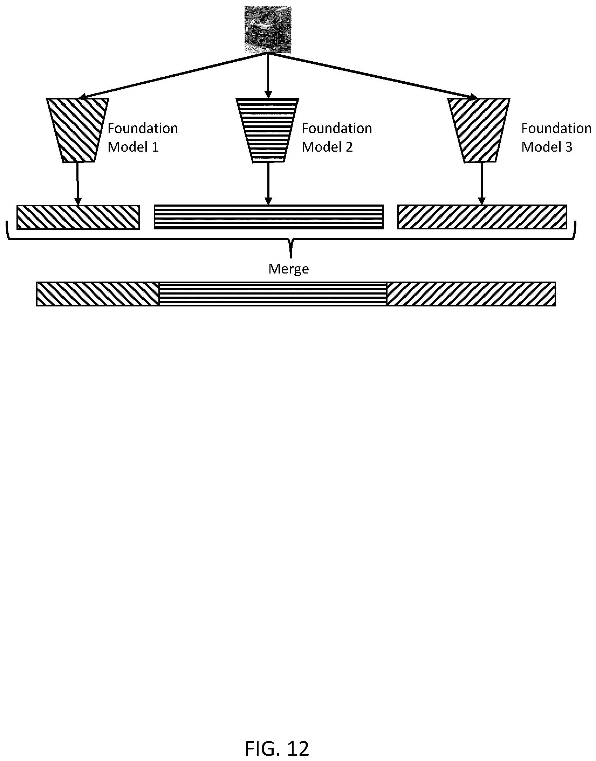

As schematically illustrated in Figure 12, a further extension of the inventive method described above may involves combining feature vectors *fᵢ*, *fₜₑₛₜ* from multiple foundation models *F₁...Fₙ* into more comprehensive vectors. For example, support images *xᵢ* and test images *xₜₑₛₜ* of power line components such as isolators as exemplified in the top part of Figure 12 may be fed into a set of *n* different foundation models *F,* thereby extracting at least *n* support feature vectors *f*_{*i*,*n*} and at least *n* test feature vectors *f_{test,n}.* Two or more of these support feature vectors *f_{i,n}, f_{test,n}* are then concatenated into larger support and test feature vectors.

Algorithm 9 shown below provides a detailed example of implementing the classification method using multiple foundation models, wherein *Fₛₑₜ* symbolize a set of *n* foundation models *F.*

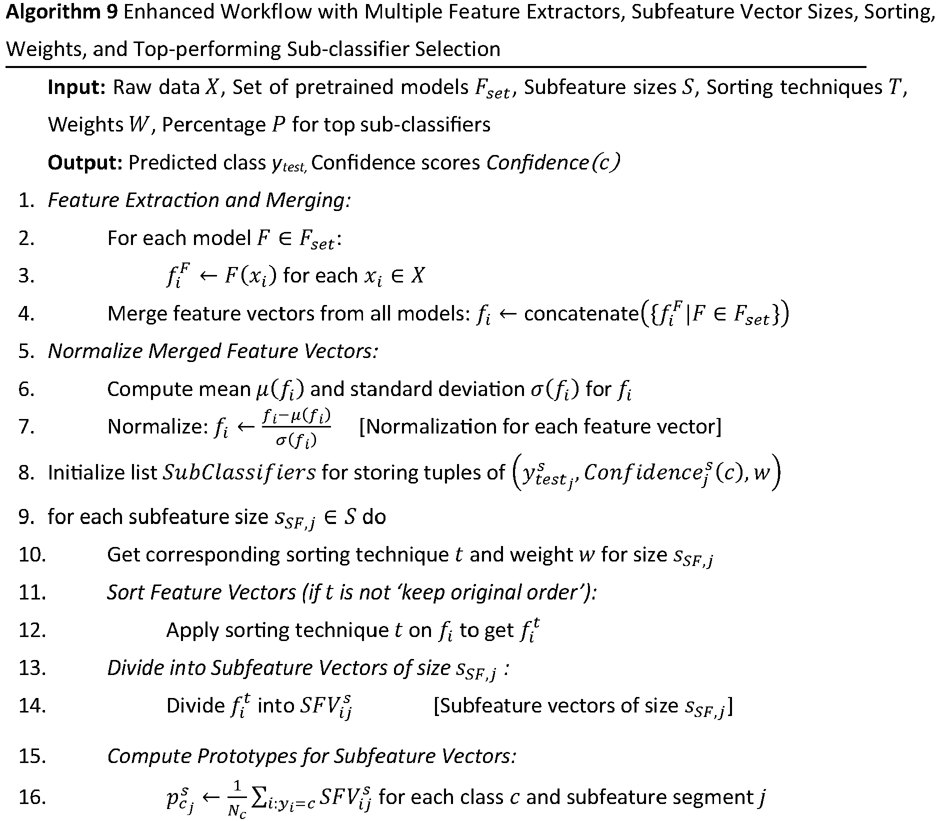

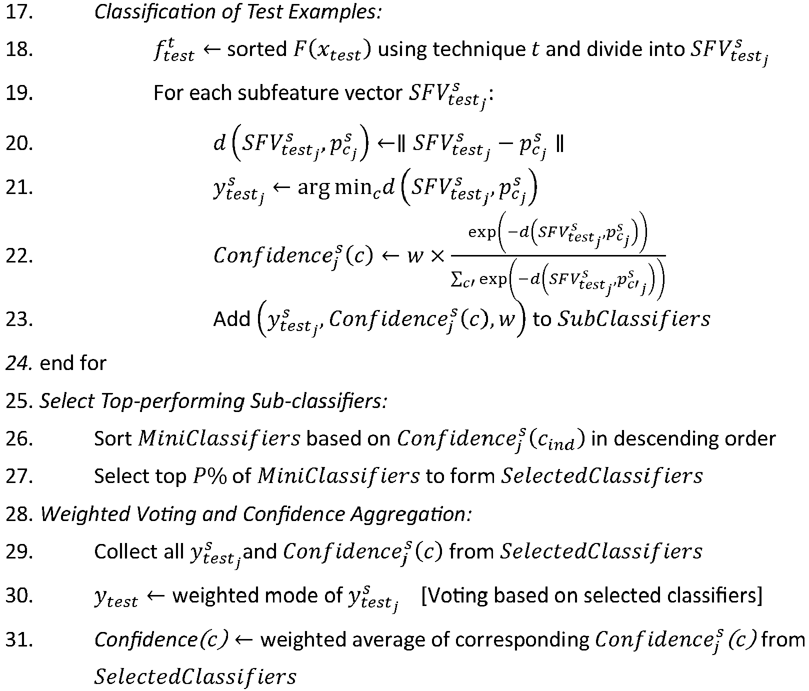

In this exemplary classification method the features are normalized by their mean and standard deviation (see lines 5-7). This normalization ensures that all features are on the same scale which is often of importance for maintaining the integrity and accuracy of the combined vector. Such a normalization step may be significant when dealing with diverse foundation models, as it harmonizes the varied feature ranges into a consistent format, allowing for more effective application of this approach.

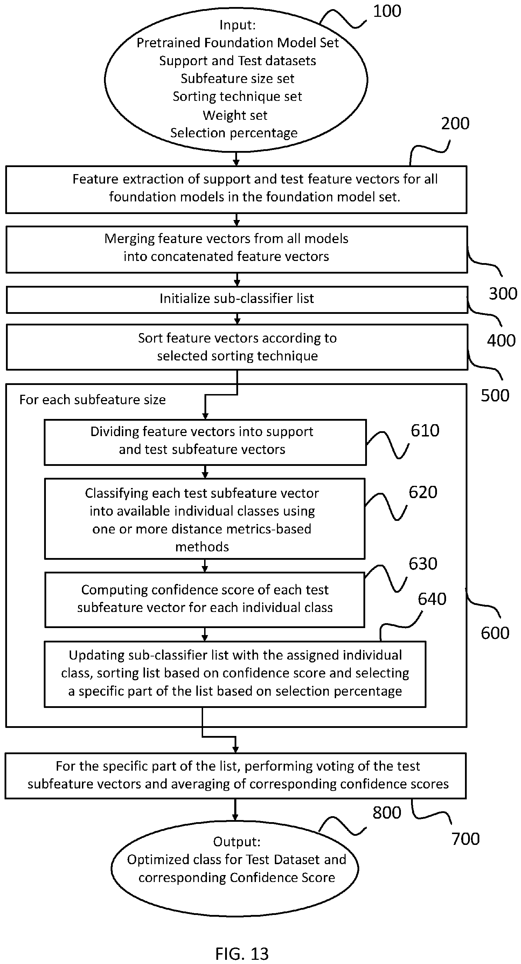

Following algorithm 9, the flow diagram of Figure 13 comprises the following steps:
100: Inputting a pretrained foundation model set *Fₛₑₜ,* raw data *X,* sorting technique set *T,* weight set *W* and Selection Percentage *%P* into the workflow / software. The foundation model set *Fₛₑₜ* comprises a plurality of foundation models *F.* The raw data *X* comprises a support dataset *xᵢ* (including available individual classes c and sizes of each subfeature vectors *s_{SF,j}*) and a test dataset *xₜₑₛₜ.* The sorting technique set *T* comprises one or more specific sorting techniques t for sorting feature vectors extracted by the pretrained foundation model *F* in step 200. The weight set *W* comprises desired weights modifying the voting of the sub-classifiers and the confidence scores. The selection percentage *%P* provides information which part of a generated sub-classifier list that shall be selected prior to determining the selected class *yₜₑₛₜ* and the corresponding confidence score *Confidence(c).*
200: Performing feature extraction of the support dataset *xᵢ* and the test dataset *xₜₑₛₜ* using each of the pretrained foundation models *F* in the foundation model set *Fₛₑₜ,* thus generating a plurality of support feature vectors *f^{F}ᵢ* and a plurality of test feature vectors *fₜₑₛₜ,* respectively. Both feature vectors *f^{F}ᵢ,f^{F}ₜₑₛₜ* involve sizes having a number of features / dimensions *sᵢ,sₜₑₛₜ,* wherein *sᵢ* and *sₜₑₛₜ* are positive integers of 1 or more, for example 10, 100 or 1000. The size *sᵢ* for each support feature vector is typically equal to the size *sₜₑₛₜ* for the corresponding test feature vector.
300. Merging feature vectors *f^{F}ᵢ,f^{F}ₜₑₛₜ* from all foundation models into concatenated feature vectors *fᵢ,fₜₑₛₜ.*
400. Initializing a sub-classifier list *SubClassifiers* for storing tuples of predicted class for each test subfeature vector, *c*, corresponding confidence score *Confidenceⱼ(c)* and weight *w.*
500: Sorting the feature vectors *fᵢ,fₜₑₛₜ* concatenated in step 300 according to selected sorting technique *t,* for example based on standard deviations *σⱼ* or on average distances *d_{avg}.* The sorting step may also involve duplication of the feature vectors as described above.
600: Classifying each test subfeature vector *SFV_{test,j}* and computing corresponding confidence scores *Confidenceⱼ(c)* for each subfeature size *s_{SF,j},* wherein step 600 comprises
610: Dividing the extracted support feature vector *fᵢ* and the extracted test feature vector *fₜₑₛₜ* into a number of support subfeature vectors *SFV_{i,j}* of sizes *s_{SF,j}* and a number of test subfeature vectors *SFV_{test,j}* of sizes *s_{SF,test}.* Each size *s_{SF,test}* of the test subfeature vectors *SFV_{test,j}* corresponds to an equal size *s_{SF,j}* of the support subfeature vectors *SFV_{i,j}.*
620: Classifying each of the test subfeature vectors *SFV_{test,j}* into at least some of the available individual classes c specified in the support dataset *xᵢ* by applying one or more of the distance metrics-based methods such as a prototypical networks *PN* method or a nearest sub-centroid *NSC* method.
630: Computing weighted confidence score *Confidenceⱼ(c)* of each test subfeature vector *SFV_{test,j}* and each of the chosen individual classes c chosen in step 710, wherein the degree of weight is set by the weight set *W.*
640: Updating sub-classifier list *SubClassifiers* with determined class c*,* confidence score *Confidenceⱼ(c)* and weight *w.*
700: Performing weighted voting of the test subfeature vectors *SFV_{test,j}* from selected parts of the sub-classifier list *SubClassifiers* to determine a resulting class *yₜₑₛₜ* and weighted averaging corresponding confidence values *Confidenceⱼ(c).* The voting may be a majority voting and/or a weighted voting, wherein the degree of weight is set by the weight set *W.*
800: Outputting the resulting class *yₜₑₛₜ* of the test dataset *xₜₑₛₜ* and corresponding confidence score *Confidence(c).*

Integrating multiple foundation models from various providers into a few-shot learning system substantially enhances its performance and reliability through several key mechanisms:
- Diverse Training Data Sets: Each model, developed by different providers, is typically trained on distinct datasets, often optimized for specific tasks. This diversity ensures a broader coverage of scenarios, enhancing the model's generalizability and reducing biases inherent in any single dataset.
- Algorithmic Diversity: Employing models built with different algorithms and configurations enriches the overall system by pooling a wide range of analytical approaches and feature extractions. This leads to a more comprehensive feature set, ideal for tackling various tasks effectively.
- Robustness and Error Handling: The combination of multiple models increases the overall resilience of the system, allowing it to maintain performance even if one model fails or encounters anomalies. This redundancy is important for maintaining reliability in applications where precision is vital.
- Enhanced Feature Extraction: By aggregating insights from several foundation models, the system gains a deeper and more nuanced understanding of the data, capturing subtleties that might be missed by a single model. This results in superior predictive accuracy and a richer analysis capability.

These strategic benefits make the integration of multiple foundation models a powerful approach in few-shot learning, ensuring that the system not only performs with enhanced accuracy and reliability but also adapts effectively to a wide range of complex and evolving tasks.

### Potential advantages and applications

With these enhancements, the novel classification methods provide significant improvements in accuracy for few-shot learning models in high-dimensional data scenarios.

Its broad applicability includes fields with limited training data, offering a nuanced solution for Al-based inspections and diagnostics.

The integration of features from multiple foundation models leads to a richer feature set, improving classification accuracy in complex tasks and enriching overall analysis accuracy.

Additionally, the framework's adaptability to various classification methods, such as nearest neighbor and centroid classifications, further amplifies its potential.

This flexibility, coupled with the ability to adeptly navigate high-dimensional spaces, makes it a versatile tool, enhancing precision and insight in a multitude of advanced analytical applications.

Below, three additional exemplary algorithms (algorithms 10 to 12) are presented, all using multiple feature extractors, where algorithm 10 performs the classification using nearest neighbor based approach for the subfeature vectors, while algorithms 11 and 12 compute nearest centroid approach and sub-centroids approach for the subfeature vectors *SFV_{i,j}, SFV_{test,j},* respectively.

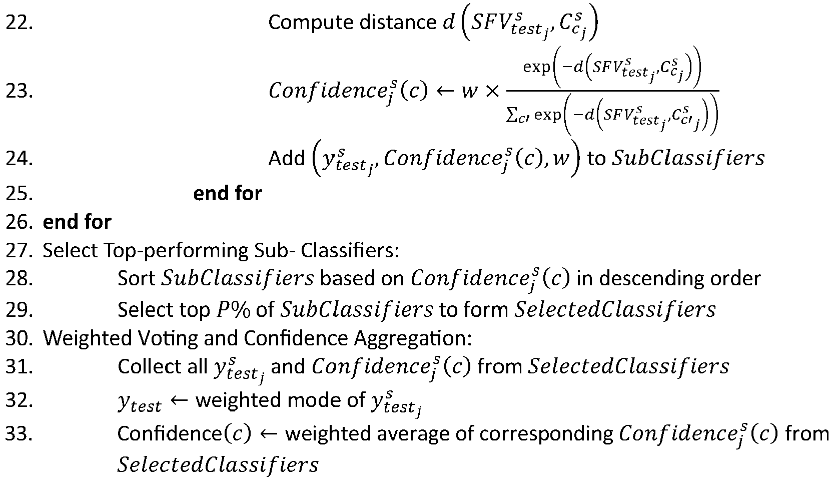

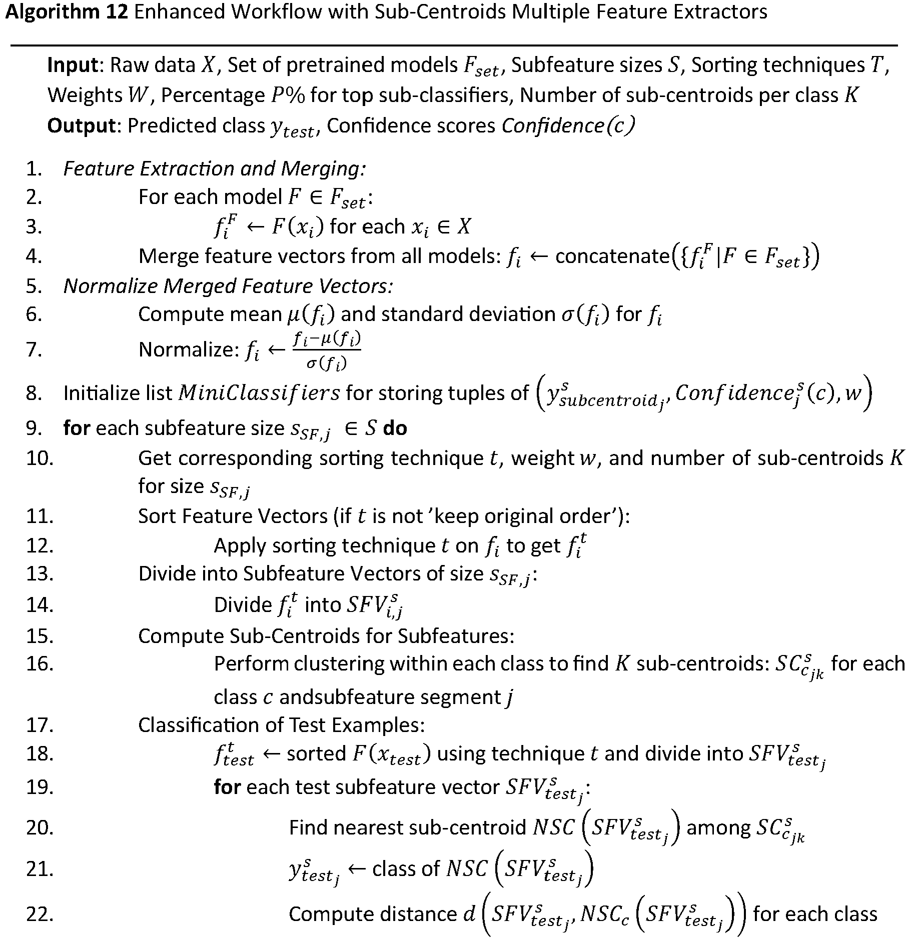

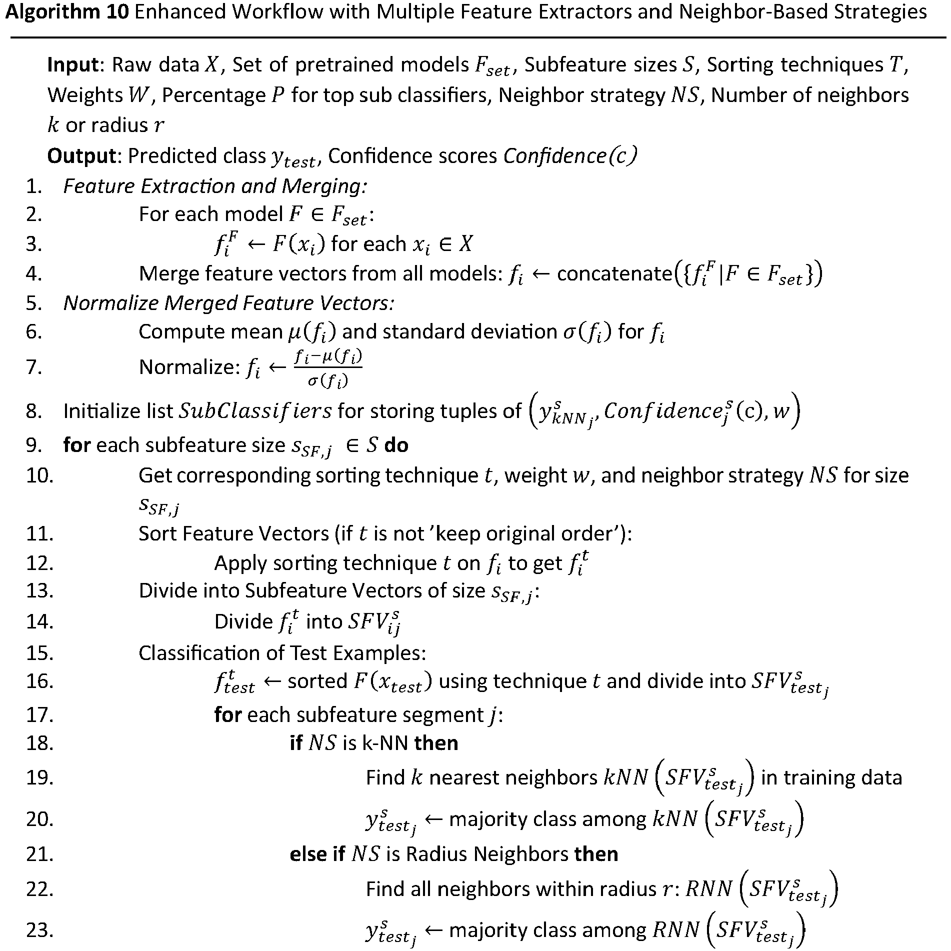

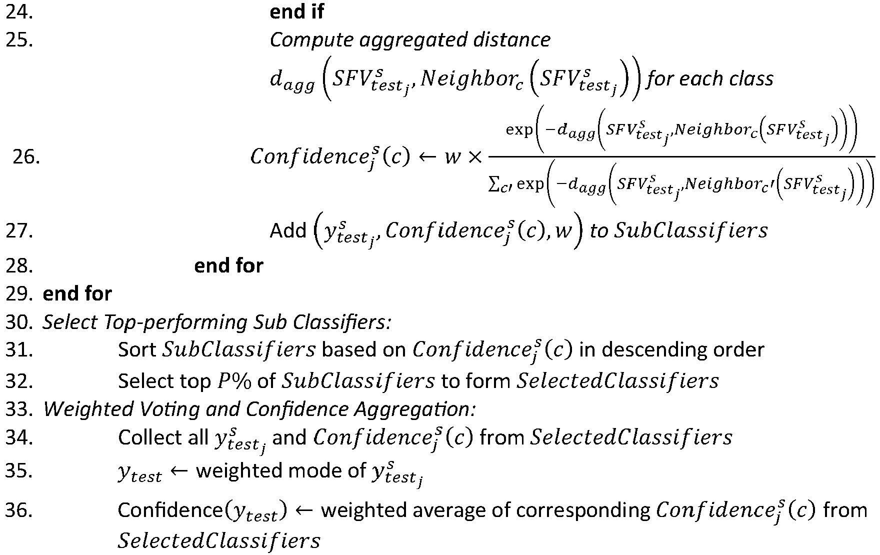

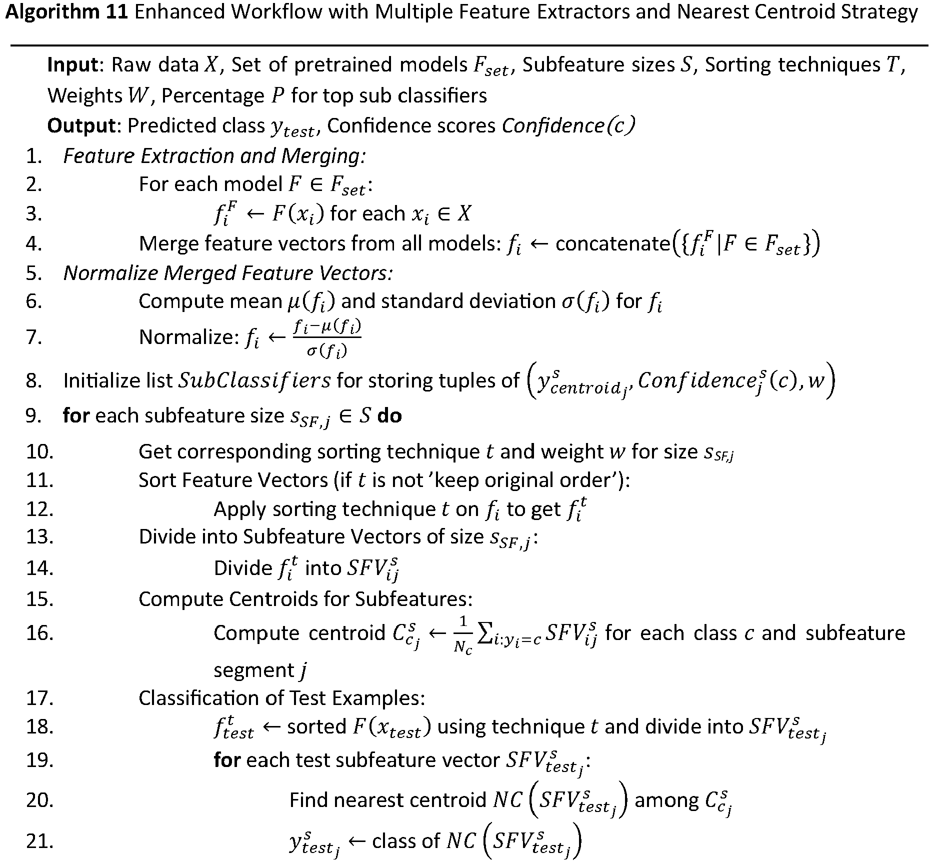

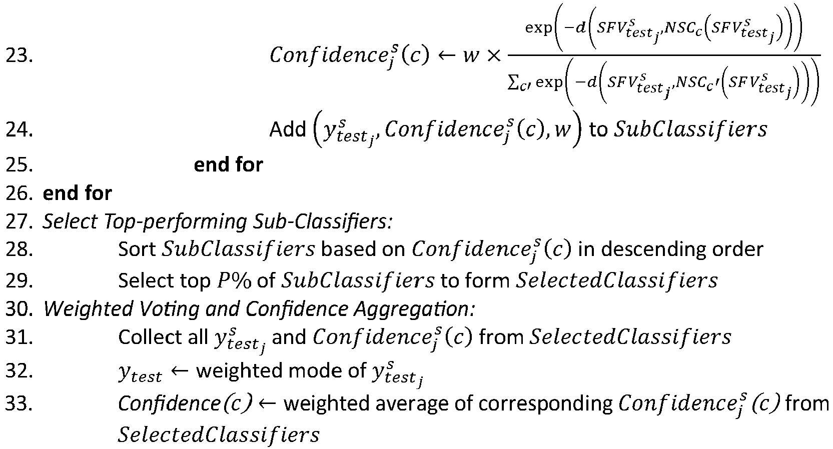

As shown in algorithm 12, each class can be represented by multiple sub-centroids to enhance classification precision. Various methods can be used to define these sub-centroids:
- Manual Grouping: Choosing sub-centroids based on expert insight and recognizable data patterns.
- Feature Function Grouping: Grouping feature vectors based on statistical functions like mean or variance to form sub-centroids.
- Difficulty-Based Grouping: Segmenting data into sub-centroids based on the difficulty of classification, helping to focus on more challenging or ambiguous areas within each class.
- *K*-Means Clustering: Utilizing *K*-means to automatically segment class features into clusters, each represented by a centroid.
- Hierarchical Clustering: Applying hierarchical clustering to determine sub-centroids by building a tree of clusters and selecting appropriate levels.
- Density-Based Clustering (e.g., DBSCAN): Identifying dense regions of data points to establish sub-centroids based on local density.
- Random Sampling: Randomly sampling subsets of data points within each class to serve as temporary sub-centroids for exploratory analysis or iterative refinement.

### Types of datasets applicable for classifications using the inventive methods

The following is a non-exhaustive list of dataset types that may be classified using the above described inventive methods.
- Image Data: Datasets comprised of digital images can be utilized in applications such as the classification of defects in manufacturing processes and general inspections, identification of specific medical conditions through diagnostic imaging, and automated species identification in biodiversity studies.
- Audio Data: Comprising sound recordings, these datasets can be applied to tasks such as detecting mechanical failures through anomalous noise patterns in industrial equipment, identifying distress calls in emergency response systems, and classifying music genres for digital media platforms.
- Video Data: Datasets of video recordings are applicable in scenarios like monitoring manufacturing lines for quality control through defect recognition, analysing pedestrian behaviour in urban planning studies, and detecting anomalous behaviours in security footage for public safety.
- Text Data: Consisting of textual content, these datasets can be leveraged for applications such as sentiment analysis in customer feedback to improve product or service quality, classification of legal documents for automated jurisprudence systems, and detection of phishing attempts in cybersecurity measures.

The inventive method accommodates these diverse types of datasets by primarily altering the foundation model used for feature extraction. For each dataset type, a corresponding foundation model is selected to effectively transform raw data into feature vectors.

Once the appropriate foundation model extracts the feature vectors, the subsequent steps in the few-shot learning process-such as calculating distances, forming prototypes or sub-centroids, and classifying through voting mechanisms-remain consistent regardless of the data type. This uniformity ensures that the inventive methods retain their effectiveness while offering the flexibility to shift between different dataset types as required by specific applications, thus making them highly adaptable solutions in diverse technological and industrial environments.

### Experiment

As a practical example, ISIC (International Skin Imaging Collaboration) training dataset from the following link were applied using algorithm 9, but without the normalization step.
https://challenge.isic-archive.com/data/#2018 (training data)

The experiment used Prototypical Networks PN with Euclidean distance in the 5 shot scenarios within training episodes containing 10 test images and 5 classes, AKIEC (actinic keratosis), DF (dermatofibroma), MEL (melanoma), NV (melanocytic nevi) and VASC (vascular). The accuracy result follows the 5-way classification accuracy approach.

The following three feature extractors were used: Meta's Dinov2-small, Google's VIT-large-patch16-224, OpenAl's CLIP-Vit-base-patch16. Features from these extractors were combined into one feature vector of the support image and the test image, without normalization.

The feature vector was then divided into subfeature vectors *SFV_{i,j}, SFV_{test,j}* having two subvector sizes *s_{SF,j}*: 2 and 16. For subvector size of *s_{SF,j}* = 2, the original order of the features was kept. For subvector size of 16, the features were ordered by standard deviation *σᵢ* of the features in the support dataset *xᵢ. w* = 2 and 16 were the weights for the two subvectors *SFV_{i,2}, SFV_{i,16}, SFV_{test,2}, SFVₜₑₛₜ,₁₆. P%* = 30% of the sub-classifiers with the highest confidence scores were selected.

With these settings the 5-way classification accuracy increased from 55.64% to 61.86% compared to the results achieved by using the prior art algorithm (algorithm 1) with identical input data.

Various embodiments of the disclosure relate to methods that are computer-implemented. Each step of the disclosed methods may be performed by a computer in the most general sense of the term, meaning any device capable of performing the data processing steps of the method, including dedicated digital circuits. The computer may comprise various combinations of known computer elements, including for example CPUs, RAM, SSDs, motherboards, network connections, firmware, software, and/or other elements known in the art that allow the computer to perform the required computing operations. The required computing operations may be defined by one or more computer programs. The one or more computer programs may be provided in the form of media or data carriers, optionally non-transitory media, storing computer readable instructions. When the computer readable instructions are read by the computer, the computer performs the required method steps. The computer may consist of a self-contained unit, such as a general-purpose desktop computer, laptop, tablet, mobile telephone, or other smart device. Alternatively, the computer may consist of a distributed computing system having plural different computers connected to each other via a network such as the internet or an intranet.

## Claims

1. A computer-implemented method for classifying test dataset (*xₜₑₛₜ*), comprising the steps of:
*A:* (100) receiving input data comprising classification dataset (*X*) comprising
a support dataset (*xᵢ*) including input classes (*yᵢ*) of the support dataset (*xᵢ*), a number of individual classes (*c*) for classification and the test dataset (*xₜₑₛₜ*),
a subfeature size set (*S*) comprising a number of subvector segments (*j*) and
a pretrained model set *(Fₛₑₜ)* comprising at least one pretrained model (*F*);
*B:* (200) performing feature extraction of the support dataset (*xᵢ*) and the test dataset *(xₜₑₛₜ)* of the classification dataset (*X*) using the pretrained model set (*Fₛₑₜ*) to generate support feature vectors (*fᵢ*) and test feature vectors (*fₜₑₛₜ*), respectively;
*C*: (600,610) in accordance with the number of subvector segments (*j*) within the subfeature size set (*S*), dividing each support feature vector (*fᵢ*) into a plurality of support subfeature vectors (*SFV_{i,j}*) and each test feature vector (*fₜₑₛₜ*) into a plurality of test subfeature vectors (*SFV_{test,j}*)*,* respectively, wherein each of the subfeature vectors (*SFV_{i,j},SFV_{test,j}*) contain at least one subvector feature (*s_{SF,j}*)*;*
*D*: for each test subfeature segment (*j*), (620) implementing at least one distance metrics-based method involving
the test subfeature vector (*SFV_{test,j}*) and
at least one of the support subfeature vectors (*SFV_{i,j}*)
to assign the subfeature vector (*SFV_{test,j}*) to a specific individual class (*c*), and
*E:* (700,800) performing voting of the test subfeature vectors (*SFV_{test,j}*) based on the assigned individual classes (*c*) to determine a predicted class (*yₜₑₛₜ*) for the test dataset (*xₜₑₛₜ*).

2. The computer-implemented method according to claim 1, wherein the at least one distance metrics-based method in step *D* for determining an individual class (*c*) for the test subfeature vectors (*SFV_{test,j}*) comprises at least one of
- prototypical networks (*PN*) involving calculating sub-prototypes (*p*_{*c*_*j*}) of the support subfeature vectors (*SFV_{i,j}*) and finding minimum distance (*d^{min}ⱼ*) between the test subfeature vectors (*SFV_{test,j}*) and the sub-prototypes (*p_{c_j}*),
- nearest neighbors (*NN*) involving calculating *k* nearest neighbors and/or all neighbors within a radius *r* from each test subfeature vector (*SFV_{test,j}*),
- nearest centroids (*NC*) involving calculating centroids (*C_{c_j}*) for the support subfeature vectors (*SFV_{i,j}*) and finding the centroid (*C_{c_j}*) nearest to the test subfeature vector (*SFV_{test,j}*) and
- nearest sub-centroids (*NSC*) in which a plurality of determined sub-centroids (*SC_{c_j}*) of each individual class (*c*) are applied to find the nearest sub-centroid (*NSC_{c_j}*) to the test subfeature vector (*SFV_{test,j}*)*.*

3. The computer-implemented method according to claim 1 or 2, wherein
step *D* further comprises
- (630) calculating confidence scores (*Confidenceⱼ(c)*) of each test subfeature vector (*SFV_{test,j}*) and each individual class (*c*) and
step *E* further comprises
- (700,800) collecting and averaging the confidence scores (*Confidenceⱼ(c)*) for the respective test subfeature vectors (*SFV_{test,j}*) to determine a predicted confidence score (*Confidence(c)*) for the predicted class (*yₜₑₛₜ*) of the test dataset (*xₜₑₛₜ*).

4. The computer-implemented method according to any one of the preceding claims,
- wherein the subfeature vectors (*SFV_{i,j},SFV_{test,j}*) corresponding to two or more of the subvector segments (*j*) have dissimilar number of subvector features (*s_{SF,j}*).

5. The computer-implemented method according to any one of the preceding claims,
wherein the input data in step *A* further comprises
- a sorting technique set (*T*) comprising at least one sorting technique (*t*),
- wherein the step *B* further comprises
- (500) choosing a sorting technique (*t*) from the sorting technique set (*T*);
- (500) generating a number of sorting indices equaling the number of features in the support feature vectors (*fᵢ*) and
- (500) sorting the support feature vectors (*fᵢ*) and the test feature vectors (*fₜₑₛₜ*) according to the chosen sorting technique (*t*) and the generated sorting indices.

6. The computer-implemented method according to claim 5, wherein the sorting technique set (*T*) comprises
- computing standard deviation (*σ^{sort}*) for
features of the support feature vectors (*fᵢ*) or a function of the support feature vectors (*fᵢ*) and/or
features of the test feature vectors (*fₜₑₛₜ*) and
- (500) sorting based on the standard deviation (*σ^{sort}*) to generate the sorted support feature vectors (*fᵢ*) and the sorted test feature vectors (*fₜₑₛₜ*)*.*

7. The computer-implemented method according to claim 5 or 6, wherein the sorting technique set (*T*) comprises
- computing distance (*d^{sort}*) between features of the support feature vectors (*fᵢ*) or a function of the support feature vectors (*fᵢ*) and/or features of the test feature vectors (*fₜₑₛₜ*) and
- (500) sorting based on the distance (*d^{sort}*) or a function of the distance (*d^{sort}*) to generate sorted support feature vectors (*fᵢ*) and sorted test feature vectors (*fₜₑₛₜ*).

8. The computer-implemented method according to any one of the preceding claims,
- wherein the input data in step *A* further comprises
- a weight factor set (*W*) and
- (800) wherein at least one of the individual classes (*c*) assigned in step *D* is weighted with at least one weight factor (*w*) among the weights factor set (*W*) when determining the predicted class (*yₜₑₛₜ*) in step *F.*

9. The computer-implemented method according to claim 8, when dependent on claim 3,
- (630) wherein at least one of the calculated confidence values (*Confidenceⱼ(c)*) is weighted with at least one weight factor (*w*) among the weights factor set (*W*).

10. The computer-implemented method according to any one of the preceding claims,
- wherein the method further comprises
(400) initializing a list of sub-classifiers (*SubClassifiers*);
- wherein the input data in step *A* further comprises
a selection percentage (*P*%) for selecting a specific part of the list of sub-classifiers *(SubClassifiers),* and
- wherein step *D* further comprises
- (640) updating the list of sub-classifiers *(SubClassifiers)* with at least the assigned individual classes (*c*),
- (640) sorting the list of sub-classifiers *(SubClassifiers)* based on at least one type of parameters for each test subfeature vector (*SFV_{test,j}*) generated by the at least one distance metrics-based method and
- (640) selecting the specific part of sub-classifiers (*SelectedSubClassifiers*) among the list of sub-classifiers *(SubClassifiers)* by use of the selection percentage (*P%*)*.*

11. The computer-implemented method according to any one of the preceding claims, when dependent on claim 3,
- wherein the method further comprises
(400) initializing a list of sub-classifiers (*SubClassifiers*);
- wherein the input data in step *A* further comprises
a selection percentage (*P*%) for selecting a top part and/or a bottom part of a list of sub-classifiers (*SubClassifiers*), and
- wherein step *D* further comprises
- (640) updating the list of sub-classifiers *(SubClassifiers)* with at least the assigned individual classes (*c*) and the confidence values (*Confidenceⱼ(c)*) generated by the at least one distance metrics-based method,
- (640) sorting the list of sub-classifiers *(SubClassifiers)* based on at least the confidence values (*Confidenceⱼ(c)*) in descending or ascending order and
- (640) selecting a top part and/or a bottom part of sub-classifiers (*SelectedSubClassifiers*) among the list of sub-classifiers *(SubClassifiers)* by use of the selection percentage (*P%*)*.*

12. The computer-implemented method according to any one of the preceding claims,
- wherein *if* in step *A* a pretrained model set *(Fₛₑₜ)* is chosen comprising a plurality of pretrained models (*F*), *then*
the feature extraction of the support dataset (*xᵢ*) and the test dataset (*xₜₑₛₜ*) generating a plurality of support feature vectors (*fᵢ*) and a plurality of test feature vectors (*fₜₑₛₜ*), respectively, are performed for at least two of the pretrained models (*F*) and
- wherein step *B* further comprises
- (300) merging the plurality of the support feature vectors (*fᵢ*) into a concatenated support feature vector (*fᵢ*) and the plurality of the test feature vectors (*fₜₑₛₜ*) into a concatenated test feature vector (*fₜₑₛₜ*),
- wherein the concatenated support feature vectors (*fᵢ*) and the concatenated test feature vector (*fₜₑₛₜ*) are employed in steps *C* and *D.*

13. The computer-implemented method according to claim 12, wherein the method comprises the steps of
- verifying compatibility of the at least two of the pretrained models (*F*) and
- deciding if a normalization between the at least two pretrained models (*F*) is desirable,
if the decision is affirmative, normalize each of the concatenated support feature vectors (*fᵢ*) and each of the concatenated test feature vectors (*fₜₑₛₜ*) extracted in step *B* by a normalization process comprising
- calculating means (*_{µ}(fᵢ),µ(fₜₑₛₜ))* and standard deviations (*σ(fᵢ),σ(fₜₑₛₜ)* and
- normalizing using the means (*µ(fᵢ),µ(fₜₑₛₜ))* and the standard deviations (*σ(fᵢ),σ(fₜₑₛₜ)).*

14. The computer-implemented method according to any one of the preceding claims, wherein step *C* further comprises
- calculating sub-prototypes (*p_{c_j}*) for each individual class (*c*) and each support subfeature vector (*SFV_{i,j}*), and
wherein step *D* further comprises
- calculating for each test subfeature vector (*SFV_{test,j}*) and each individual class (*c*) a distance (*dⱼ*) between the test subfeature vector (*SFV_{test,j}*) and the sub-prototype (*p_{c_j}*),
- determining a minimum distance (*d^{min}ⱼ*) among the calculated distances (*dⱼ*) and
- setting the individual class (*c*) of the test subfeature vector (*SFV_{test,j}*) to the individual class (*c*) corresponding to the minimum distance (*d^{min}ⱼ*)*.*

15. A computer-readable storage medium comprising instructions which, when executed by a computer, cause the computer to carry out the steps of the computer-implementer method according to any one of claims 1-14.
